# EUROPEAN PATENT SPECIFICATION

(11) **EP 1 615 309 B1**
(45) Date of publication and mention of the grant of the patent: **09.04.2008**
(21) Application number: 05016403.7
(22) Date of filing: 28.09.1998
(51) Int. Cl.: H02B 13/02, H01H 33/66, H01H 31/00, H02B 13/035

(54) **Switchgear**
Schaltvorrichtung
Appareil de commutation

(30) Priority: 29.09.1997 JP 26461497; 27.03.1998 JP 8233498
(43) Date of publication of application: 11.01.2006
(62) Divisional of application: 98944259.5
(73) Proprietor: MITSUBISHI DENKI KABUSHIKI KAISHA, Chiyoda-ku Tokyo 100-8310 (JP)
(72) Inventor: Takahashi, Masayuki, Chiyoda-ku Tokyo 100-8310 (JP); Sakai, Michio, Chiyoda-ku Tokyo 100-8310 (JP); Yorita, Mitsumasa, Chiyoda-ku Tokyo 100-8310 (JP); Itotani, Takayuki, Chiyoda-ku Tokyo 100-8310 (JP); Miyamoto, Seiichi, Chiyoda-ku Tokyo 100-8310 (JP); Maruyama, Toshimasa, Chiyoda-ku Tokyo 100-8310 (JP); Ito, Takefumi, Chiyoda-ku Tokyo 100-8310 (JP); Kawamata, Iwao, Chiyoda-ku Tokyo 100-8310 (JP); Kimura, Toshinori, Chiyoda-ku Tokyo 100-8310 (JP); Koyama, Kenichi, Chiyoda-ku Tokyo 100-8310 (JP); Sato, Shinji, Chiyoda-ku Tokyo 100-8310 (JP); Hisamori, Youichi, Chiyoda-ku Tokyo 100-8310 (JP); Sekiya,Takashi, Chiyoda-ku Tokyo 100-8310 (JP)
(74) Representative: HOFFMANN EITLE

(56) References cited:
- EP-A- 0 766 277
- EP-A- 0 893 811
- GB-A- 1 329 725
- JP-Y- 7 024 762
- US-A- 5 387 772

## Description

### Technical Field

The present invention relates to a switchgear including a primary circuit switching portion for connecting and disconnecting a bus conductor and a load conductor and a ground switching portion for connecting and disconnecting the load conductor and a grounding conductor.

### Background Art

In a switchgear used for distributing to various load appliances and other electric rooms power received from a bus, internal appliances such as a primary circuit switch for connecting and disconnecting a bus conductor and a load conductor, a ground switch for grounding the load conductor and a control device necessary for monitoring and control are properly provided in a grounded metallic outer casing together with connective conductors such as the bus conductor for connection to a bus and the load conductor for connection to a transmission cable leading to a load.

As disclosed in Japanese Patent Publication No. 7-28488 (1995), a switchgear of this kind includes a functional unit in which the primary circuit switching portion and the ground switching portion acting as a main portion of the internal appliances are integrally arranged together with a portion of the connective conductors. The functional unit is disposed in the outer casing such that only connection to the bus and the transmission cable is necessary.

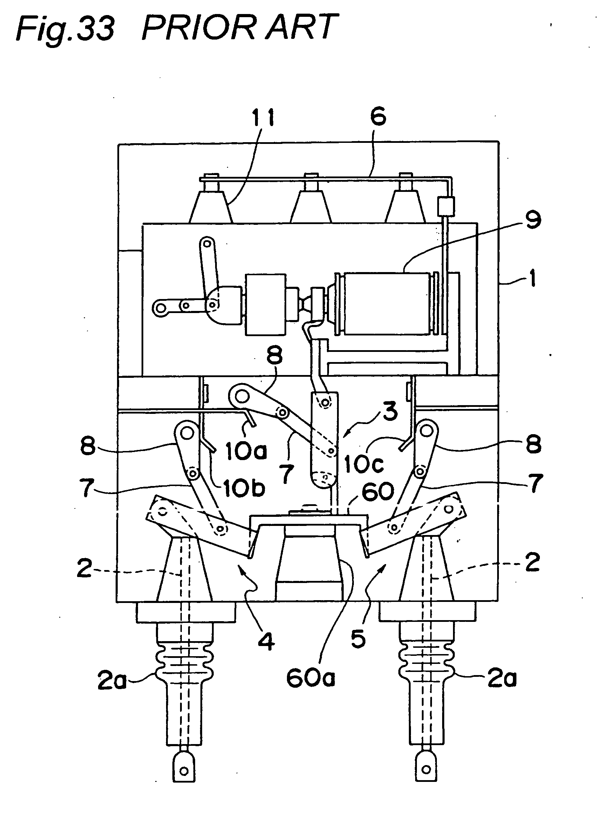

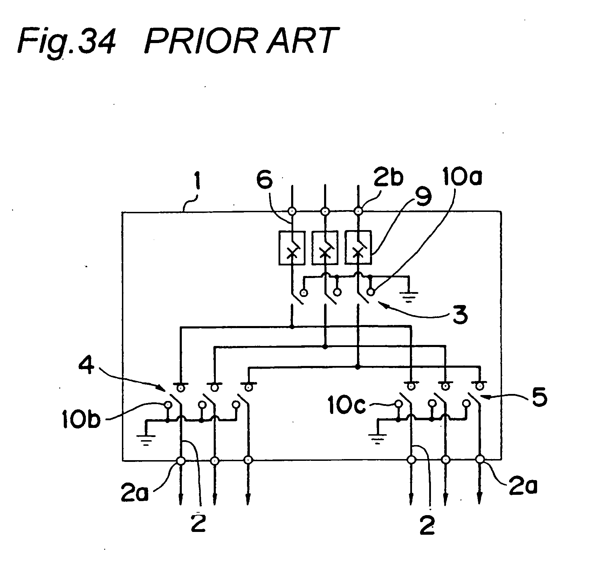

Fig. 33 is a side elevational view showing a main arrangement of the switchgear disclosed in Japanese Patent Publication No. 7-28488 (1995) and Fig. 34 is an electrical connection diagram of the switchgear shown in Fig. 33. Insulating gas is filled into this switchgear. First, second and third switches 3, 4 and 5 and vacuum arc quenching chambers 9 are provided in a vessel 1 including bushings 2a for connection to the transmission cables and bushings 2b (Fig. 34) for connection to the bus such that the bushings 2a and 2b pass through portions of its peripheral wall.

Three bus branch conductors 6 which are connected to the outside bus (not shown) through the bushings 2b as shown in Fig. 34 so as to correspond to three phases, respectively are provided in the metallic vessel 1 so as to be supported by support insulators 11 and are connected, by way of switching devices (not shown) provided in the vacuum arc quenching chambers 9 and the first switch 3, to intermediate conductors 60 fixed to support insulators 60a as shown in Fig. 33. Each of the bus branch conductors 6 is caused to branch off from the intermediate conductor 60 in two directions and the respective branches of each bus branch conductor 6 are connected, through the second and third switches 4 and 5, to load conductors 2 supported by the bushings 2a so as to be connected to the outside transmission cables (not shown) via the load conductors 2, respectively.

Each of the switches 3, 4 and 5 includes a pivotal electrode which is pivoted about a pivotal axis in response to actuation of a drive source (not shown) transmitted through a metal link 8 and an insulating link 7. In accordance with its pivotal electrode, the first switch 3 can be changed to a closed circuit position in which an output electrode of the switching device in the vacuum arc quenching chamber 9 is connected to a fixed electrode projected from a corresponding location of the intermediate conductor 60, a grounded position in which the pivotal electrode is connected to a grounding conductor 10a and a disconnected circuit position which is disposed between the above two positions and is spaced away from the fixed electrode and the grounding electrode 10a.

Meanwhile, in response to pivotal movement of respective pivotal electrodes, the second and third switches 4 and 5 can also be changed to three positions relative to the load conductors 2, fixed electrodes projected from corresponding locations of the intermediate conductor 60 and grounding conductors 10b and 10c in the same manner as the first switch 3.

By the above described arrangement, since a primary circuit switching portion for connecting and disconnecting the bus branch conductors 6 and the load conductors 2 and a ground switching portion for grounding the load conductors 2 are provided in the vessel 1 together with the connective conductors, the bus branch conductors 6 may be connected, via the bushings 2b, to the bus outside the vessel 1 and the load conductors 2 may be connected, through the bushings 2a, to the transmission cables outside the vessel 1, so that it becomes possible to provide a compact switchgear.

However, in this conventional switchgear referred to above, the switching device in the vacuum arc quenching chamber 9 merely functions to open and close the circuit, the first switch 3 acts not only as a disconnector for disconnection from another circuit but as a ground switch for grounding the output electrode of the switching device in a disconnected state and the second and third switches 4 and 5 function as ground switches for grounding the corresponding load conductors 2, respectively. Since the two switches (either the first and second switches 3 and 4 or the first and third switches 3 and 5) are provided in series between the bus branch conductors 6 and the load conductors 2, space for providing these switches should be secured and thus, such a problem arises that it is restricted to make the vessel 1 compact.

Meanwhile, the insulating gas is filled into the vessel 1. Therefore, since in accordance with kinds of the insulating gas, clearances of insulation should be secured among the three phases, relative to ground and between electrodes at the disconnected circuit position in the switches 3, 4 and 5, the switches 3, 4 and 5 become larger in size. Furthermore, since the switches 3, 4 and 5 should be spaced sufficiently from each other, efficiency for providing the switches 3, 4 and 5 in the vessel 1 is low and thus, it is disadvantageously restricted to make the vessel 1 compact.

Meanwhile, since the vacuum arc quenching chamber 9 is provided for each of the three phases in the three-phase circuit shown in Fig. 34, positions for providing these vacuum arc quenching chambers 9 should be secured, so that such drawbacks are incurred that it is impossible to make the vessel 1 compact and its production cost rises.

Moreover, if arc short-circuiting occurs in the vessel 1, a sort of an explosive phenomenon is induced in which arc energy causes the insulating gas filled into the vessel 1 to reach high temperatures and high pressures in a short period. Therefore, since a pressure release valve for releasing pressure in the vessel 1 is required to be provided on the vessel 1 and the vessel 1 should have such a strength as to withstand high-pressure state until completion of pressure release, such inconveniences are incurred that the vessel 1 becomes complicated structurally and its production cost rises.

EP-A-0 893 811, which is part of the prior art under Art. 54(3) EPC, discloses a switchgear having a flexible conductor for connecting a first movable electrode to a bus terminal with relative movement.

From JP 07 024 762 Y, a switchgear according to the preamble of claim 1 is known.

### Disclosure of Invention

The object of the present invention is to provide, with a view to eliminating the above mentioned drawbacks of prior art, a switchgear which can be made compact and can be produced at low cost and is quite safe so as to be free from an explosion even at the time of arc short-circuiting therein.

In order to accomplish this object of the present invention, a switchgear according to the present invention comprises the features of claim 1.

In accordance with the present invention, since the components of the primary circuit subjected to high voltage are accommodated together with the connective conductors in the vacuum vessel kept under high vacuum and the primary circuit is provided in the vacuum vessel having excellent insulating characteristics, clearances of insulation required among three phases, relative to ground and between the contacts are reduced. Furthermore, since each of the primary circuit switching portion and the ground switching portion is formed by a pair of the fixed electrode and the movable electrode, the switchgear is made compact. Meanwhile, even if arc short-circuiting occurs in the vacuum vessel, no gas is present in the vacuum vessel kept under vacuum, so that there is no risk of explosion.

### Brief Description of Drawings

Fig. 1 is a cross-sectional view showing a main portion of a switchgear according to a first embodiment of the present invention.
Fig. 2 is a front elevational view in section of the switchgear of Fig. 1.
Fig. 3 is an electrical connection diagram of the switchgear of Fig. 1.
Fig. 4 is a cross-sectional view showing a main portion of a switchgear according to a second embodiment of the present invention.
Fig. 5 is a front elevational view in section of the switchgear of Fig. 4.
Fig. 6 is an electrical connection diagram of the switchgear of Fig. 4.
Fig. 7 is a cross-sectional view showing a main portion of a switchgear according to a third embodiment (not part of the present invention).
Fig. 8 is a front elevational view in section of the switchgear of Fig. 7.
Fig. 9 is an electrical connection diagram of the switchgear of Fig. 7.
Fig. 10 is a cross-sectional view showing a main portion of a switchgear according to a fourth embodiment (not part of the present invention).
Fig. 11 is a front elevational view in section of the switchgear of Fig. 10.
Fig. 12 is an electrical connection diagram of the switchgear of Fig. 10.
Fig. 13 is a view explanatory of an example of provision of a metal shield in a vacuum vessel.
Fig. 14 is a view explanatory of another example of provision of the metal shield in the vacuum vessel.
Fig. 15 is a view explanatory of still another example of provision of the metal shield in the vacuum vessel.
Fig. 16 is a view explanatory of an example of provision of a further metal shield in the vacuum vessel.
Fig. 17 is a view explanatory of a desirable example of provision of an insulating portion (not in accordance with the invention).
Fig. 18 is a view explanatory of a construction for absorbing thermal expansion and contraction of a bus conductor.
Fig. 19 is a schematic cross-sectional view showing a main portion of a switchgear according to a fifth embodiment of the present invention.
Fig. 20 is a schematic cross-sectional view showing a main portion of a switchgear according to a sixth embodiment (not part of the present invention).
Fig. 21 is a schematic cross-sectional view showing a main portion of a switchgear according to a seventh embodiment (not part of the present invention).
Fig. 22 is a schematic cross-sectional view showing a main portion of a switchgear according to an eighth embodiment of the present invention.
Fig. 23 is a schematic cross-sectional view showing a main portion of a switchgear according to a ninth embodiment not part of the present invention.
Fig. 24 is a schematic cross-sectional view showing a main portion of a switchgear according to a tenth embodiment of the present invention.
Fig. 25 is a schematic cross-sectional view showing a main portion of a switchgear according to an eleventh embodiment of the present invention.
Fig. 26 is a schematic cross-sectional view showing a main portion of a switchgear according to a twelfth embodiment of the present invention.
Fig. 27 is a schematic cross-sectional view showing a main portion of a switchgear according to a thirteenth embodiment of the present invention.
Fig. 28 is a schematic cross-sectional view showing a main portion of a switchgear according to a fourteenth embodiment of the present invention.
Fig. 29 is a schematic cross-sectional view showing a main portion of a switchgear according to a fifteenth embodiment of the present invention.
Fig. 30 is a schematic fragmentary cross-sectional view showing a main portion of a switchgear according to a sixteenth embodiment of the present invention.
Fig. 31 is a schematic fragmentary cross-sectional view showing a main portion of a switchgear according to a seventeenth embodiment of the present invention.
Fig. 32 is a schematic fragmentary cross-sectional view showing a main portion of a switchgear according to an eighteenth embodiment of the present invention.
Fig. 33 is a view showing a main portion of a prior art switchgear.
Fig. 34 is an electrical connection diagram of the prior art switchgear of Fig. 33.

### Best Mode for Carrying Out the Invention

Hereinafter, embodiments of the present invention are described with reference to the drawings.

### (First embodiment)

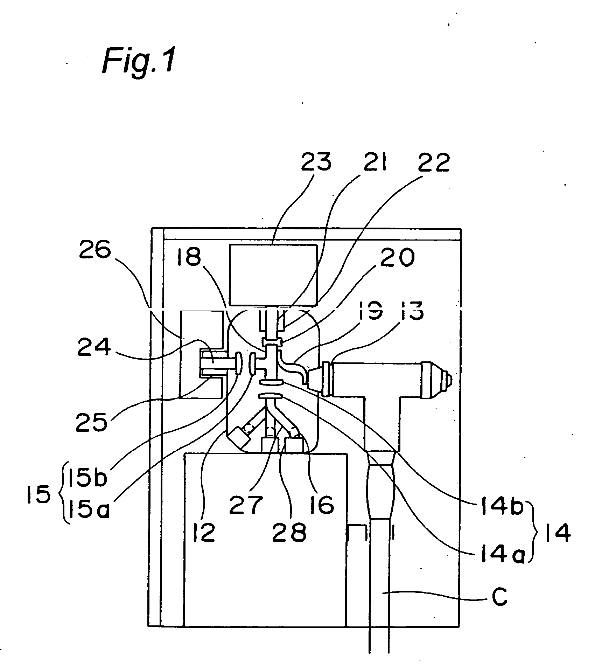

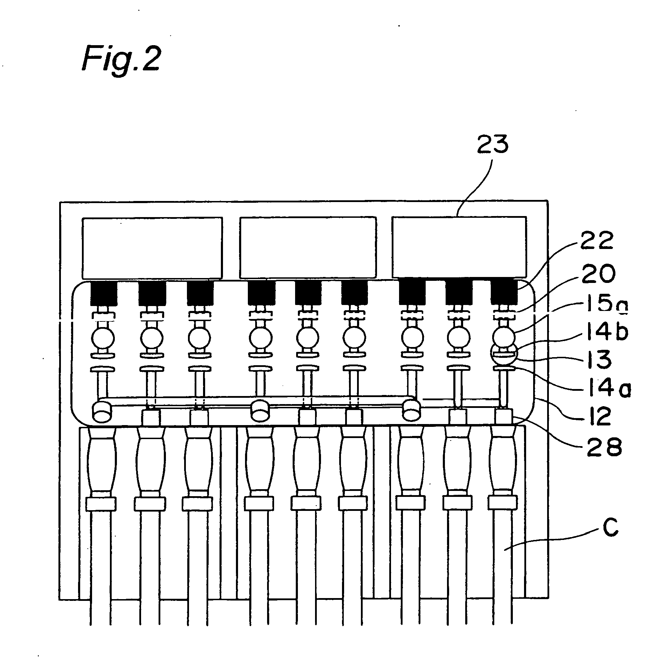

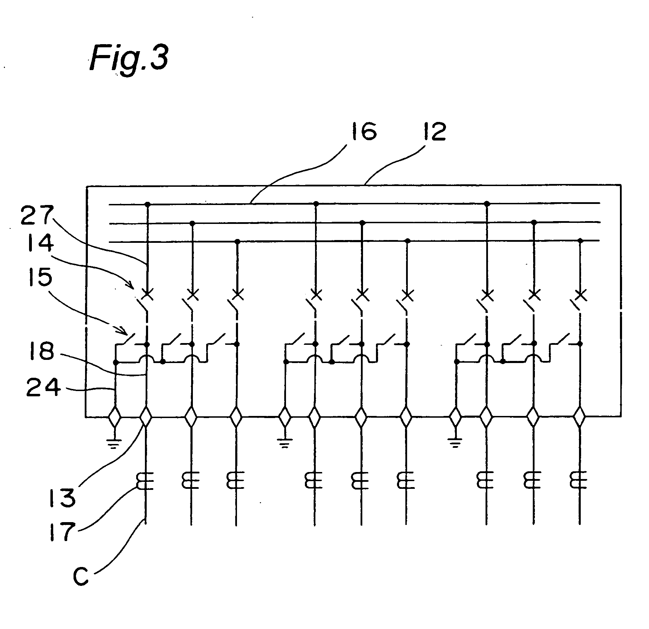

Fig. 1 is a cross-sectional view showing a main portion of a switchgear according to a first embodiment of the present invention, Fig. 2 is a front elevational view in section of the switchgear and Fig. 3 is an electrical connection diagram of the switchgear.

The switchgear shown in these drawings includes a vacuum vessel 12 kept under high vacuum, in which primary circuit switching portions 14, ground switching portions 15, bus conductors 16, load conductors 18 and grounding conductors 24 are provided. As shown in Fig. 2, first drive devices 23 for driving the primary circuit switching portions 14, second drive devices 26 for driving the ground switching portions 15 and ceramic cable busings13 for connection to outside transmission cables C are mounted on outer portions of the vacuum vessel 12.

The load conductor 18 is coupled, through a ceramic insulating portion 20, with an output end 21 of the first drive device 23, which is hermetically sealed by a first bellows 22 so as to project into the vacuum vessel 12. In response to actuation of the first drive devices 23, the three load conductors 18 corresponding to three phases, respectively as shown in Fig. 3 are moved as one unit vertically in Fig. 2. An intermediate portion of the load conductor 18 is connected, via a flexible conductor 19, to a terminal portion of the cable bushing 13 so as to be connected to the transmission cable C outside the vacuum vessel 12 by way of the cable bushing 13, with the terminal portion of the cable bushing 13 projecting into the vacuum vessel 12. This connective state is adapted to be maintained by elastic deformation of the flexible conductor 19 regardless of the above mentioned movement of the load conductor 18.

As shown in Fig. 3, a current transformer 17 for a meter is provided at an intermediate portion of the transmission cable C so as to detect electric current supplied to a load (not shown) by the transmission cable C. A first movable electrode 14b of the primary circuit switching portion 14 is secured to a lower end of the load conductor 18. The three bus conductors 16 corresponding to the three phases are, respectively, supported by insulators 28 on a bottom of the vacuum vessel 12. Three branch conductors 27 of each bus conductor 16 are raised so as to be disposed below corresponding ones of the load conductors 18 and a first fixed electrode 14a of the primary circuit switching portion 14 is secured to an upper end of the branch conductor 27 so as to confront the first movable electrode 14b.

The primary circuit switching portion 14 including the first movable electrode 14b and the first fixed electrode 14a connects and disconnects the first movable electrode 14b and the first fixed electrode 14a upon vertical movement of the load conductor 18 in response to actuation of the first drive device 23 so as to function as a switch for establishing and intercepting flow of electric current between the bus conductor 16 and the load conductor 18.

Meanwhile, upon actuation of the first drive device 23, a distance of the first movable electrode 14b from the first fixed electrode 14a may be changed to two stages of a short distance and a long distance from the first fixed electrode 14a. In this case, when the first movable electrode 14b is disposed at the long distance from the first fixed electrode 14a, the primary circuit switching portion 14 can function also as a disconnector. Vertical movement of the load conductor 18 can be performed while interior of the vacuum vessel 12 is kept under vacuum by action of the first bellows 22.

On the other hand, a branch portion projecting in a direction away from the cable bushing 13 is provided at an intermediate portion of the load conductor 18 and a second fixed electrode 15a of the ground switching portion 15 is secured to a distal end of this branch portion. The grounding conductor 24 is integrally coupled with an output end of the second drive device 26, which is hermetically sealed by a second bellows 25 so as to project into the vacuum vessel 12. In response to actuation of the second drive devices 26, the three grounding conductors 24 corresponding to the three phases, respectively are moved as one unit in directions towards and away from the branch portions.

A second movable electrode 15b is secured to a distal end of each grounding conductor 24 so as to confront the distal end of the branch portion of the load conductor 18 when the primary circuit switching portion 14 is in an open circuit state. Meanwhile, the grounding conductor 24 is extended out of the vacuum vessel 12 so as to be grounded properly as shown in Fig. 3.

The ground switching portion 15 including the second movable electrode 15b and the second fixed electrode 15a connects and disconnects the second movable electrode 15b and the second fixed electrode 15a upon movement of the grounding conductor 24 in response to actuation of the second drive device 26 so as to function as a ground switch for effecting or canceling grounding of a load side of the primary circuit switching portion 14 in an open circuit state. In the same manner as vertical movement of the load conductor 18, the grounding conductor 24 can be retractably moved in response to actuation of the second drive device 26 while interior of the vacuum vessel 13 kept under vacuum by action of the second bellows 25.

In the switchgear of the above described arrangement, since the primary circuit switching portions 14 and the ground switching portions 15 are accommodated together with the connective conductors such as the bus conductors 16, the load conductors 18 and the grounding conductors 24 in the vacuum vessel 12 kept under vacuum and a primary circuit subjected to high voltage is provided in vacuum having excellent insulating characteristics, clearances of insulation among them can be reduced, so that components of the primary circuit can be compactly disposed together with the connective conductors and thus, the switchgear can be made far more compact than conventional switchgears. Moreover, even if arc short-circuiting occurs in the vacuum vessel 12, no gas is present in the vacuum vessel 12, so that there is no - risk of explosion caused by the arc short-circuiting, thereby resulting in high safety. Meanwhile, since the first movable electrode 14b of the primary circuit switching portion 14 and the second fixed electrode 15a of the ground switching portion 15 are integrally provided at the portions of the load conductor 18, the primary circuit switching portion 14 and the ground switching portion 15 can be disposed efficiently and thus, the switchgear can be made more compact. In addition, since the insulating portion 20 is provided on the movable member of the primary circuit switching portion 14 in a plane substantially orthogonal to a direction of movement of the movable member of the primary circuit switching portion 14, bending load applied to the insulating portion 20 when the first movable electrode 14b is pressed against the first fixed electrode 14a, so that failure of the insulating portion 20 can be prevented in advance and thus, durability of the insulating portion 20 is improved.

### (Second embodiment)

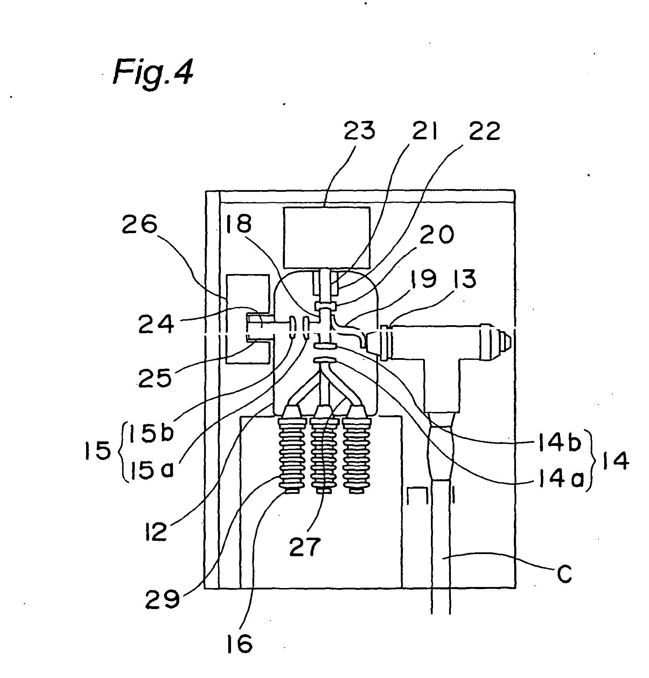

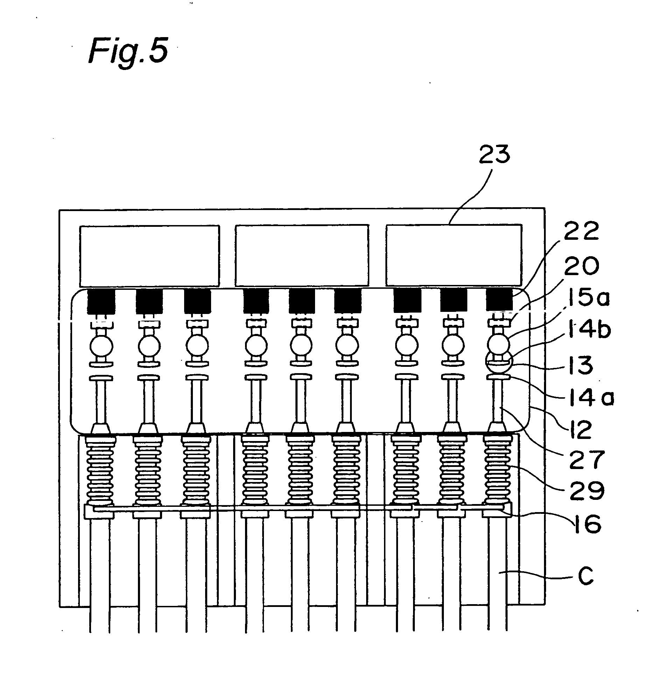

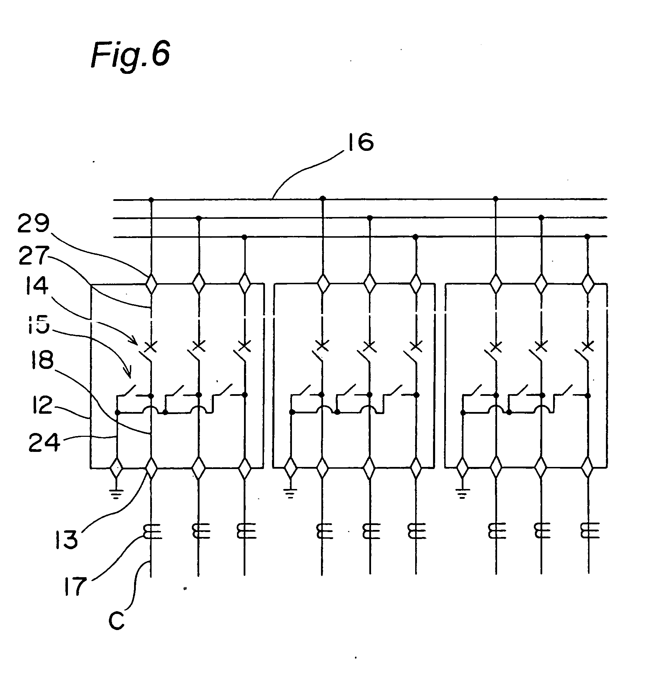

Fig. 4 is a cross-sectional view showing a main portion of a switchgear according to a second embodiment of the present invention, Fig. 5 is a front elevational view in section of the switchgear and Fig. 6 is an electrical connection diagram of the switchgear.

In this embodiment, the bus conductors 16 are disposed outside the vacuum vessel 12 and the three bus branch conductors 27 which branch off from the bus conductors 16 so as to correspond to three phases, respectively are extended into the vacuum vessel 12 by way of bus bushings 29 which are provided so as to pass through corresponding locations of a peripheral wall of the vacuum vessel 12. The primary circuit switching portion 14 is constituted by the first fixed electrode 14a secured to a distal end of the bus branch conductor 27 and the first movable electrode 14b which is secured to the lower end of the load conductor 18 so as to be disposed above the first fixed electrode 14a. Opening and closing and disconnection of the primary circuit switching portion 14 are performed in response to actuation of the first drive device 23. The arrangement of the ground switching portion 15, connection between the load conductor 18 and the cable bushing 13 and other constructions are similar to those of the first embodiment.

In the switchgear of the above described arrangement, since a primary circuit is provided in vacuum having excellent insulating characteristics in the same manner as the first embodiment, such effects are gained that the switchgear is made far more compact than prior art switchgears and high safety is achieved by eliminating a risk of explosion caused by arc short-circuiting in the vacuum vessel 12. Furthermore, the bus branch conductors 27 branching off from the bus conductors 16 disposed outside the vacuum vessel 12 are provided in the vacuum vessel 12. Therefore, when a plurality of functional units each integrally including the primary circuit switching portions 14 and the ground switching portions 15 are prepared as shown in Figs. 5 and 6 and these functional units are properly provided in the course of the bus conductors 16, the number of the functional units can be increased or reduced easily and thus, such an additional effect can be obtained that it is possible to perform design having high degree of freedom.

### (Third embodiment)

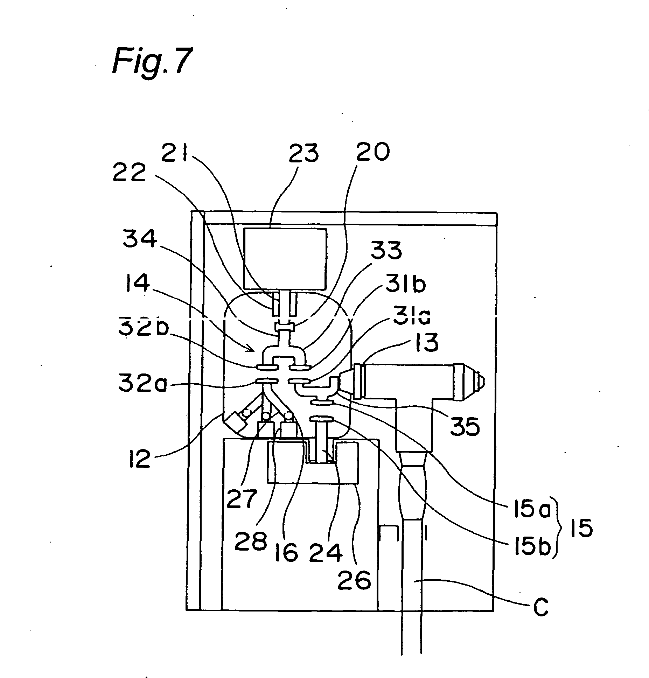

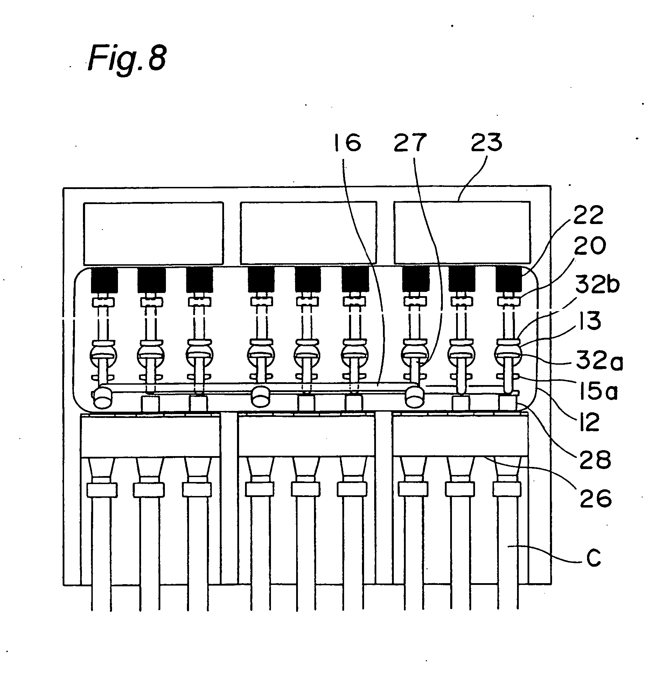

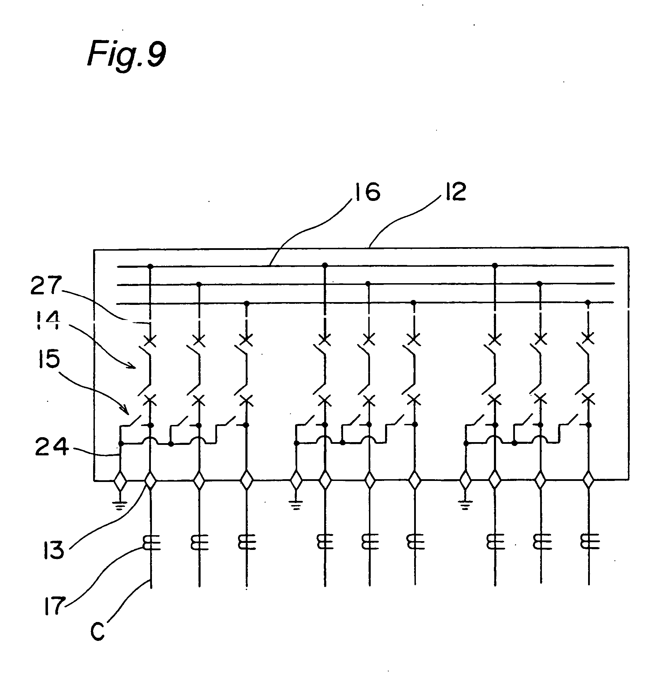

Fig. 7 is a cross-sectional view showing a main portion of a switchgear according to a third embodiment which is not part of the present invention, Fig. 8 is a front elevational view in section of the switchgear and Fig. 9 is an electrical connection diagram of the switchgear.

In this embodiment, the arrangement of the primary circuit switching portion 14 in the vacuum vessel 12 is made different from that of the first embodiment. Namely, the primary circuit switching portion 14 includes, in addition to a fixed electrode 32a secured to the distal end of the bus branch conductor 27, a fixed electrode 31 a which is secured, at one side of the fixed electrode 32a, to a distal end of a load conductor 35 connected to the cable bushing 13. On the other hand, a lower portion of an intermediate conductor 33 coupled, through the insulating portion 20, with the output end 21 of the first drive device 23 mounted on an upper outside of the vacuum vessel 12 is bifurcated into two forks and movable electrodes 31 b and 32b are secured to lower ends of the forks so as to confront the fixed electrodes 31 a and 32a, respectively. Therefore, a two-point switch construction is obtained in which a first switching portion including the fixed electrode 31 a and the movable electrode 31 b and a second switching portion including the fixed electrode 32a and the movable electrode 32b are arranged in series between the bus conductor 16 and the load conductor 35 as shown in Fig. 9.

Meanwhile, except that the ground switching portion 15 includes the second fixed electrode 15a secured to a distal end of an intermediate branch portion of the load conductor 35 and the second movable electrode 15b secured to the distal end of the grounding conductor 24 and the second drive device 26 for enabling the second movable electrode 15b to be connected to and disconnected from the second fixed electrode 15a is mounted on a lower outside of the vacuum vessel 12, the third embodiment is similar to the first embodiment. It is needless to say that the third embodiment can also be applied to the second embodiment in which the bus conductors 16 are provided outside the vacuum vessel 12.

In the switchgear of the above described arrangement, the same effects as those of the first and second embodiments can be achieved. In addition, since the primary circuit switching portion 14 has the two-point switch construction, distance between the contacts at the time of breaking and disconnection of the primary circuit switching portion 14 can be reduced, so that the switchgear can be made compact. Furthermore, since the load conductor 35 and the cable bushing 13 can be connected to each other by a rigid construction without using the flexible conductor 19, more stable operating performance can be obtained.

### (Fourth embodiment)

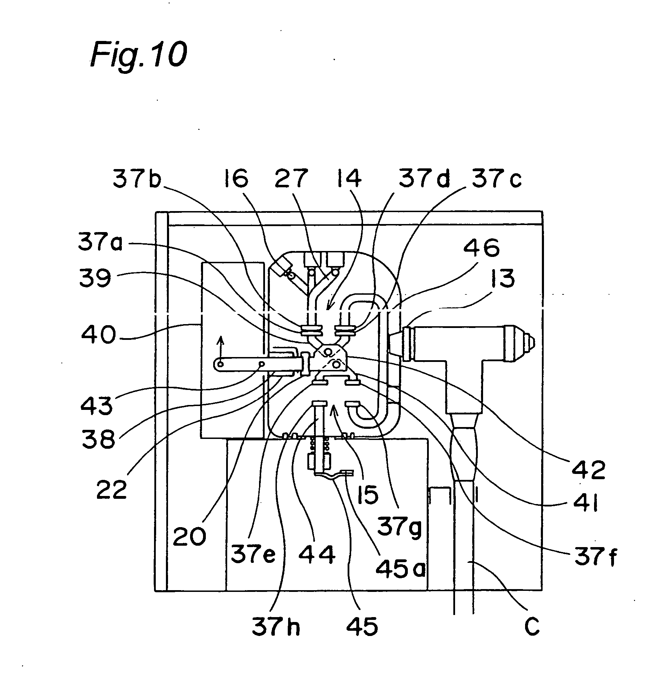

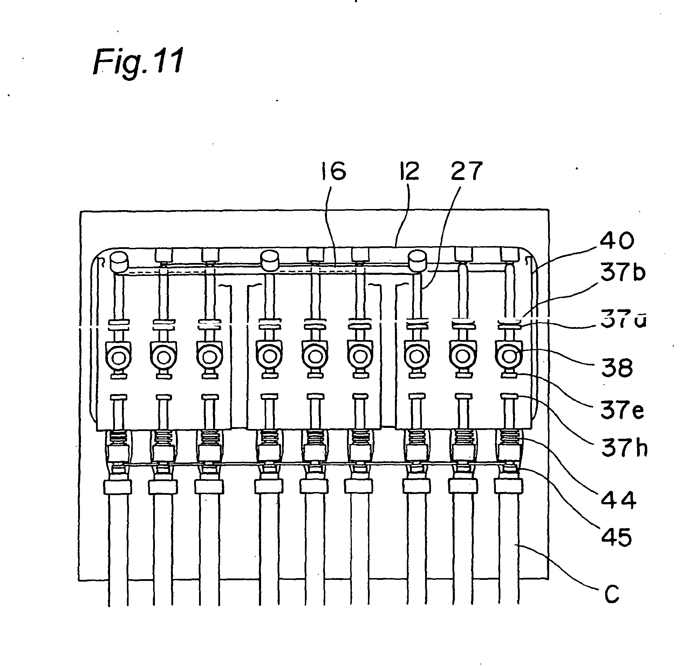

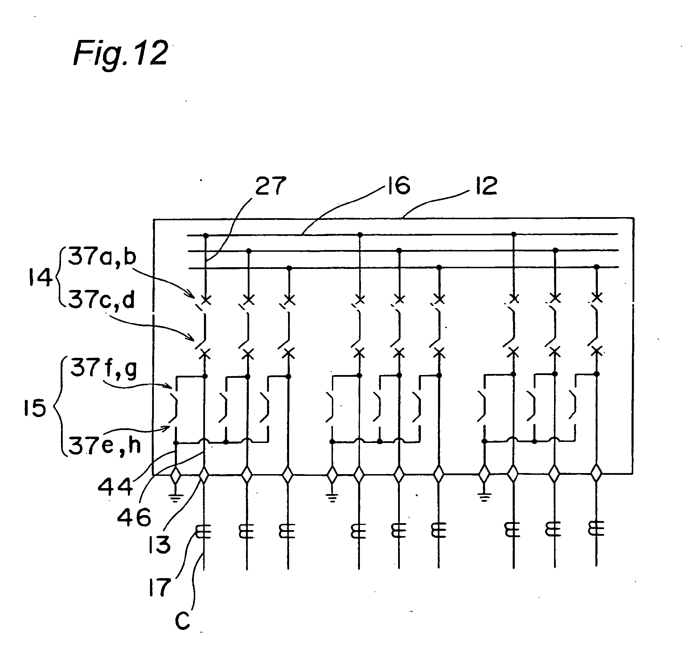

Fig. 10 is a cross-sectional view showing a main portion of a switchgear according to a fourth embodiment which is also not part of the present invention, Fig. 11 is a front elevational view in section of the switchgear and Fig. 12 is an electrical connection diagram of the switchgear.

In this embodiment, both the primary circuit switching portion 14 and the ground switching portion 15 in the vacuum vessel 12 have two-point switch constructions and have their movable member and the first and second drive devices in common. Namely, the primary circuit switching portion 14 includes a fixed electrode 37b secured to the distal end of the bus branch conductor 27 disposed at an upper portion of the vacuum vessel 12 and a fixed electrode 37d which is secured, at one side of the fixed electrode 37b, to a load conductor 46 connected to the cable bushing 13. As shown in Fig. 10, the load conductor 46 is a member having a substantially U-shaped section, whose intermediate portion is secured to the cable bushing 13 and the fixed electrode 37d is secured to an end of a downwardly bent portion of an upper side of the load conductor 46.

Meanwhile, the ground switching portion 15 includes a fixed electrode 37g secured to an end of an upwardly bent portion of a lower side of the load conductor 46 and a fixed electrode 37h secured, at one side of the fixed electrode 37g, to an upper end of a grounding conductor 44 erected on the bottom of the vacuum vessel 12. A lower end of the grounding conductor 44 is projected out of the vacuum vessel 12 and is connected to a grounding metal 45a via a flexible conductor 45.

The movable member 42 possessed in common by the primary circuit switching portion 14 and the ground switching portion 15 is disposed at one side of the load conductor 46 and a drive device 40 for the movable member 42 is mounted on an outside of the vacuum vessel 12 remote from the cable bushing 13. The drive device 40 includes a pivotal link 38 which passes through the peripheral wall of the vacuum vessel 12 and is pivoted about a substantially horizontal pin provided in the course of the pivotal link 38. The movable member 42 is coupled, through the ceramic insulating portion 20, with a distal end of the pivotal link 38, which extends into the vacuum vessel 12 such that the movable member 42 is moved vertically upon pivotal movement of the pivotal link 38 in response to actuation of the drive device 40. Meanwhile, a portion of the peripheral wall of the vacuum vessel 12, which the pivotal link 38 passes through, is hermetically sealed by the first bellows 22 such that pivotal movement of the pivotal link 38 upon actuation of the drive device 40 is performed while interior of the vacuum vessel 12 is kept under vacuum.

A bifurcate intermediate conductor 39 having two forks is coupled with an upper portion of the movable member 42 by a pin driven substantially horizontally such that ends of the forks are directed upwardly, while a connective conductor 41 having a shape similar to that of the intermediate conductor 39 is coupled with a lower portion of the movable member 42 by another pin driven substantially horizontally such that ends of the forks are directed downwardly. Movable electrodes 37a and 37c of the primary circuit switching portion 14 are, respectively, secured to opposite ends of the intermediate conductor 39 and are disposed below the fixed electrodes 37b and 37d so as to confront the fixed electrodes 37b and 37d, respectively. Meanwhile, movable electrodes 37e and 37f of the ground switching portion 15 are, respectively, secured to opposite ends of the connective conductor 41 and are disposed above the fixed electrodes 37h and 37g so as to confront the fixed electrodes 37h and 37g, respectively.

By the above described arrangement, the primary circuit switching portion 14 has a two-point switch construction in which a first switching portion including the fixed electrode 37b and the movable electrode 37a and a second switching portion including the fixed electrode 37d and the movable electrode 37c are arranged in series between the bus conductor 16 and the load conductor 46 as shown in Fig. 12. Thus, the primary circuit switching portion 14 is closed and opened when the movable member 42 is moved upwardly and downwardly, respectively upon pivotal movement of the pivotal link 38 in response to actuation of the drive device 40.

Meanwhile, as shown in Fig. 12, the ground switching portion 15 also has a two-point switch construction in which a first switching portion including the fixed electrode 37h and the movable electrode 37e and a second switching portion including the fixed electrode 37g and the movable electrode 37f are arranged in series between the grounding conductor 44 and the load conductor 46. Thus, in contrast with the primary circuit switching portion 14, the ground switching portion 15 is closed and opened when the movable member 42 is moved downwardly and upwardly, respectively upon pivotal movement of the pivotal link 38 in response to actuation of the drive device 40.

When the primary circuit switching portion 14 is closed, the intermediate conductor 39 mounted on the movable member 42 is pivoted about the coupling pin and the load conductor 46 having the above mentioned shape is curved by its elasticity so as to bring the electrodes at the first and second switching portions into contact with each other simultaneously and positively. Similarly, when the ground switching portion 15 is closed, the connective conductor 41 mounted on the movable member 42 is pivoted about the coupling pin and the grounding conductor 44 is moved downwardly by elasticity of the flexible conductor 45 supporting the lower end of the grounding conductor 44 so as to bring the electrodes at the first and second switching portions into contact with each other simultaneously and positively. It is needless to say that the arrangement of the fourth embodiment can also be applied to the second embodiment in which the bus conductors 16 are provided outside the vacuum vessel 12.

In the switchgear of the above described arrangement, the same effects as those of the first and second embodiments can be gained. Meanwhile, since both the primary circuit switching portion and the ground switching portion have the two-point switch constructions, the switchgear can be made compact by reduction of distances between the contacts in the same manner as the third embodiment. Moreover, since the primary circuit switching portion 14 and the ground switching portion 15 have the movable member 42 and the drive device 40 in common, the switchgear is made more compact by reduction of the number of components and structural simplification.

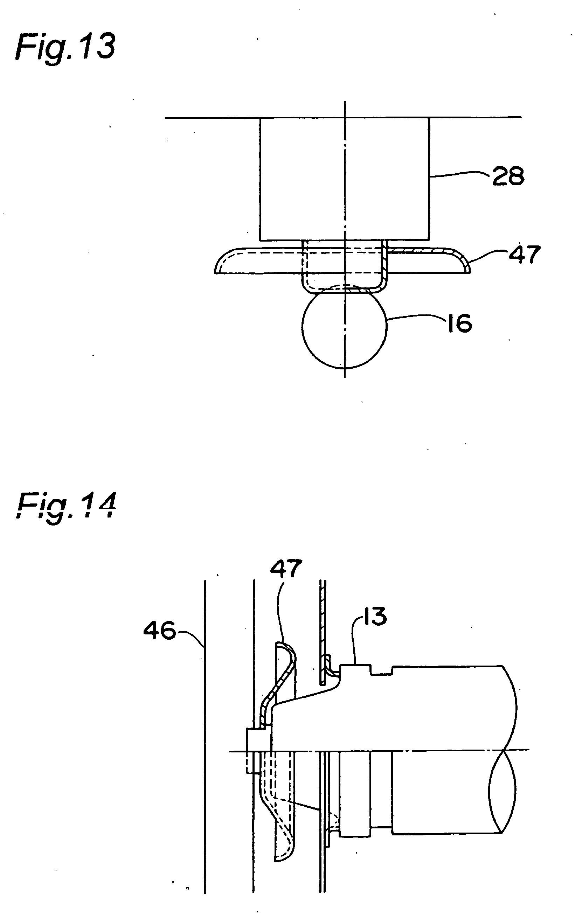

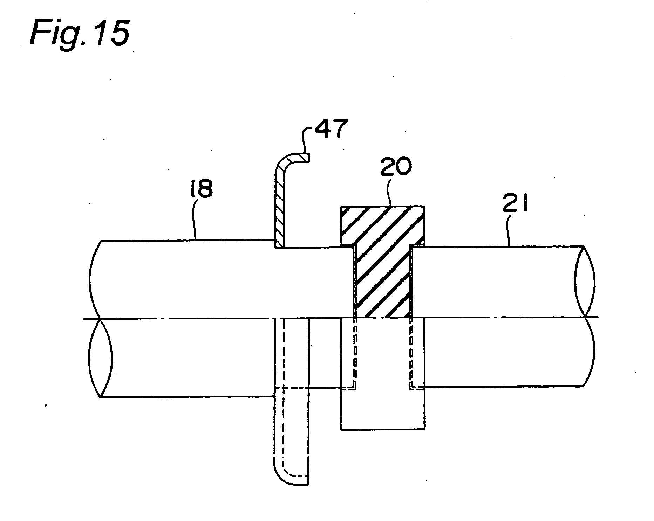

In the foregoing embodiments, such a problem arises in the vacuum vessel 12 that metallic vapor arc produced between the electrodes upon connection and disconnection of the electrodes is scattered around the primary circuit switching portion 14 and soils its periphery. In order to solve this problem, metal shields for catching the metallic vapor arc are provided at proper locations in the vacuum vessel 12 as shown in Figs. 13-16. The metal shields 47 shown in Figs. 13-15 are provided for covering the insulating member projecting into the vacuum vessel 12. The metal shield 47 shown in Fig. 13 covers the insulator 28 for supporting the bus conductor 16 in the vacuum vessel 12, the metal shield 47 shown in fig. 14 covers a portion of the cable bushing 13 projecting into the vacuum vessel 12 and the metal shield 47 shown in Fig. 15 covers the insulating portion 20 provided between the output end 21 of the first drive device 23 and the load conductor 18 as shown in Figs. 1 and 4.

The metal shield 47 is formed by molding a metal plate into a dished shape and is mounted such that its bottom face is directed towards each of the insulator 28, the cable bushing 13 and the insulating portion 20. The metal shield 47 is kept at a potential substantially identical with that of the primary circuit in the vacuum vessel 12. The thus provided metal shields 47 have a function of catching the metallic vapor arc produced upon connection and disconnection of the primary circuit switching portion 14 and diffused to the corresponding locations, while cooling the metallic vapor arc. Therefore, since the metal shields 47 prevent deterioration of insulating performance of the insulator 28, the cable bushing 13 and the insulating portion 20 due to adherence of the metallic vapor arc thereto, durability and safety of these insulating members can be upgraded.

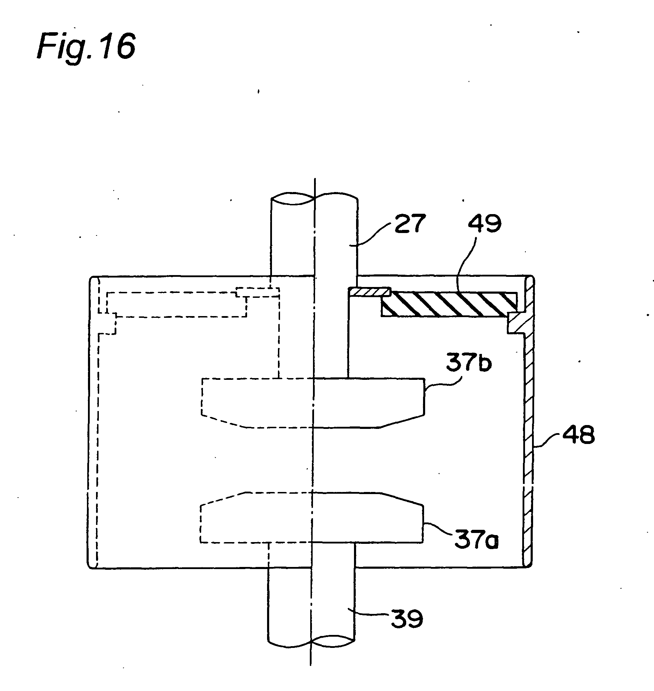

On the other hand, the metal shield 48 shown in Fig. 16 covers periphery of the primary circuit switching portion 14 producing the metallic vapor arc and prevents diffusion of the metallic vapor arc into the vacuum vessel 12. Fig. 16 shows an example of application of the metal shield 48 to the primary circuit switching portion 14 in the fourth embodiment of Fig. 10. The metal shield 48 formed by a metallic cylinder is supported by a circular insulating support plate 49 secured to an intermediate portion of the bus branch conductor 27 and is hung downwardly. The metal shield 48 is mounted so as to cover outside of the fixed electrode 37b secured to the lower end of the bus branch conductor 27 and the movable electrode 37a secured to the upper end of the intermediate conductor 39 such that the metal shield 48 is spaced a proper distance from the fixed electrode 37b and the movable electrode 37a. Since this metal shield 48 is kept at floating potential in contrast with the metal shields 47 shown in Figs. 13-15, clearances of insulation from the metal shield 48 to the fixed electrode 37b and the movable electrode 37a can be kept small and thus, the switchgear can be made compact.

The thus mounted metal shield 48 has a function of catching the metallic vapor arc produced upon connection and disconnection of the fixed electrode 37b and the movable electrode 37a, while cooling the metallic vapor arc with its inner face. Therefore, since the metal shield 48 reduces diffusion of the metallic vapor arc, it becomes possible to prevent deterioration of insulating performance of the insulating members provided at the various locations in the vacuum vessel 12. Meanwhile, this metal shield 48 can be likewise disposed in the vicinity of other electrodes of the primary circuit switching portion 14 and further can be, needless to say, disposed in the vicinity of the electrodes of the primary circuit switching portion 14 in the first to third embodiments.

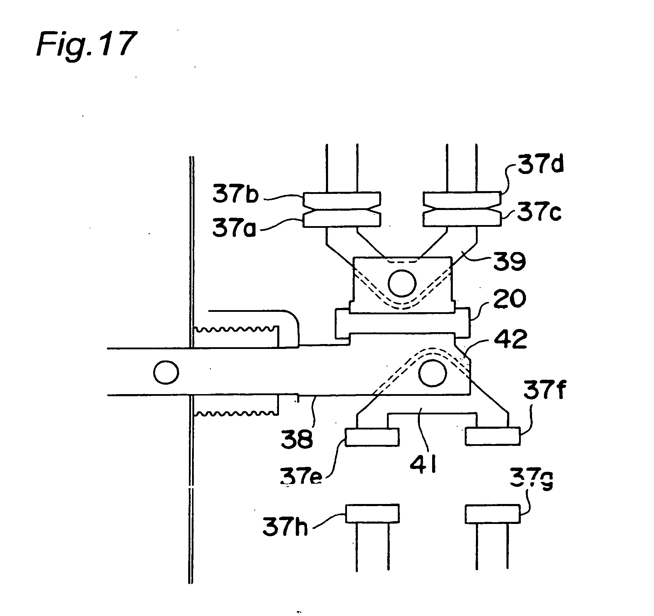

Meanwhile, in the fourth embodiment shown in Fig. 10, when the primary circuit switching portion 14 or the ground switching portion 15 is opened and closed upon pivotal movement of the pivotal link 38, the insulating portion 20 provided between the pivotal link 38 and the movable member 42 is undesirably subjected to bending force due to pressing between the corresponding electrodes. Fig. 17 shows provision of the insulating portion 20 for the purpose of solving this problem. In Fig. 17, the insulating portion 20 is provided, in a plane substantially orthogonal to a direction of movement of the movable member 42 upon action of the drive device 40, in the course of the movable member 42 integrally provided at a distal end of the pivotal link 38 and is disposed below the intermediate conductor 39.

Even if the movable electrodes 37a and 37c provided on the intermediate conductor 39 are pressed against the fixed electrodes 37b and 37d, respectively as shown in Fig. 17, reaction force of this pressing force is merely applied, as compressive force, to the insulating portion 20, so that failure of the insulating portion 20 due to bending can be prevented beforehand. Meanwhile, in the first to third embodiments, since the insulating portion 20 satisfies the above mentioned provision, a risk of failure of the insulating portion 20 is small.

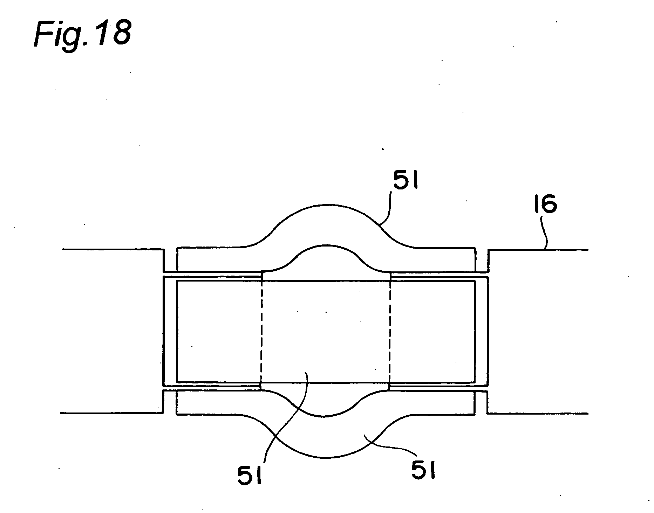

Meanwhile, since the bus conductor 16 provided in the vacuum vessel 12 in the first, third and fourth embodiments or the bus conductor 16 provided outside the vacuum vessel 12 in the second embodiment generates heat upon application of high voltage thereto and is expanded by action of this heat, it is necessary to provide an arrangement for absorbing expansion of the bus conductor 16. Fig. 18 shows an arrangement for solving this problem, in which the bus conductor 16 is severed at its proper intermediate locations and the severed locations of the bus conductor 16 are coupled with each other at a plurality of circumferential spots by a plurality of flexible conductors 51 which are deflected upon application of axial force thereto.

By this arrangement, when the bus conductor 16 is expanded due to thermal expansion caused by heat generation referred to above, the flexible conductors 51 are deflected so as to reduce distance between the severed locations of the bus conductor 16 such that expansion of the bus conductor 16 is absorbed, so that not only mechanical failure of the bus conductor 16 can be prevented beforehand but durability of the bus conductor 16 can be improved.

### (Fifth embodiment)

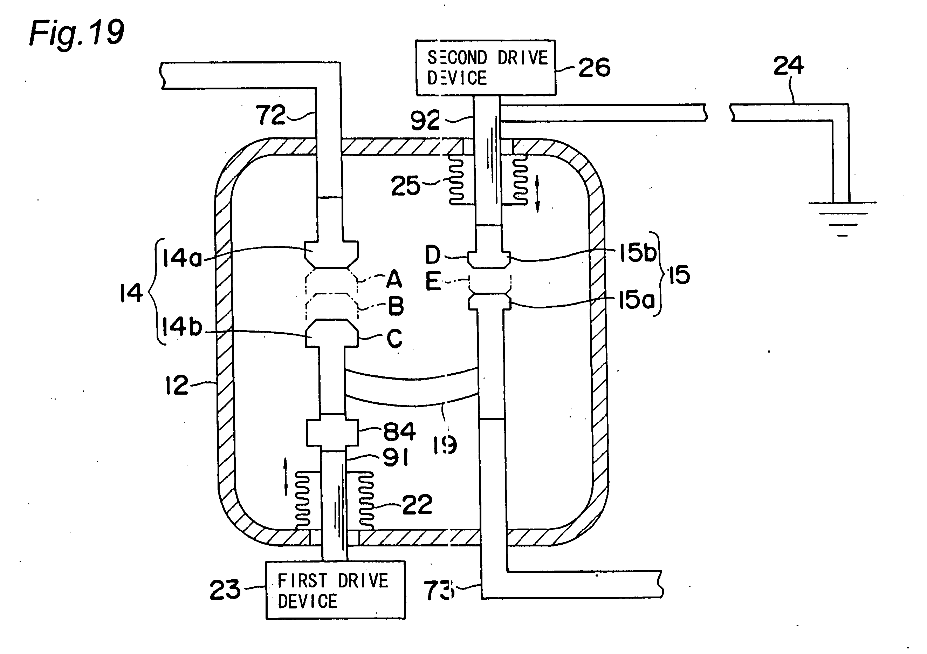

Fig. 19 is a schematic cross-sectional view showing a main portion of a switchgear according to a fifth embodiment of the present invention. In Fig. 19, the rectangular vacuum vessel 12 is kept under high vacuum. A bus terminal 72 which is connected to an outside bus is fixed to a top of the vacuum vessel 12 so as to pass through a wall of the vacuum vessel 12. A portion of the vacuum vessel 12, which the bus terminal 72 passes through, is sealed such that interior of the vacuum vessel 12 is kept under vacuum.

The first fixed electrode 14a having a shape of inverted T is provided at a lower end of the bus terminal 72 extending into the vacuum vessel 12, while the first movable electrode 14b having a shape of T is provided so as to confront the first fixed electrode 14a. The first movable electrode 14b is retractably moved linearly in two stages by the first drive device 23 as described later, so that the first movable electrode 14b and the first fixed electrode 14a are connected and disconnected and thus, the primary circuit switching portion 14 is opened, closed and disconnected.

The first movable electrode 14b is supported by a vertically extending first operating rod 91 and an insulating rod 84 is provided between the first operating rod 91 and the first movable electrode 14b. The first operating rod 91 passes through a bottom of the vacuum vessel 12 outwardly. The first operating rod 91 and an inner face of the wall of the vacuum vessel 12 are coupled with each other by the first bellows 22 such that the vacuum vessel 12 is set to hermetic state. A lower end of the first operating rod 91 is coupled with the first drive device 23 disposed outside the vacuum vessel 12. Therefore, the first operating rod 91 is retractably moved in two stages by the first drive device 23 and thus, the first movable electrode 14b is retractably moved linearly among a disconnected position C, an open circuit position B and a closed circuit position A.

A load terminal 73 which is connected to an outside transmission cable is fixed to the bottom of the vacuum vessel 12 so as to pass through the bottom of the vacuum vessel 12 in parallel with the first operating rod 91. The second fixed electrode 15a having a shape of T is erected on an upper end of the load terminal 73. The flexible conductor 19 is stretched between the second fixed electrode 15a and the first movable electrode 14b. Thus, when the primary circuit switching portion 14 has been closed, electric power fed to the bus terminal 72 is supplied to the load terminal 73 by way of the flexible conductor 19 and the second fixed electrode 15a.

The second movable electrode 15b having a shape of inverted T is disposed immediately above the second fixed electrode 15a and is coupled with a lower end of an electrically conductive second operating rod 92 extending vertically. The grounding conductor 24 is connected to the second operating rod 92 and is grounded. An upper end of the second operating rod 92 passes through the top of the vacuum vessel 12. The second operating rod 92 and the inner face of the wall of the vacuum vessel 12 are coupled with each other by the second bellows 25 such that the vacuum vessel 12 is set to hermetic state. The second operating rod 92 is coupled with the second drive device 26 which is provided outside the vacuum vessel 12 so as to retractably move the second operating rod 92.

When the second operating rod 92 is advanced by the second drive device 26 in a state where the primary circuit switching portion 14 is disconnected, the second movable electrode 15b is moved from an open circuit position D to a closed circuit position E so as to be connected to the second fixed electrode 15a such that the load terminal 73 is grounded.

In the switchgear of the above described arrangement, since the primary circuit switching portion 14 and the ground switching portion 15 each having a pair of the fixed terminal and the movable terminal are accommodated in the vacuum vessel 12 kept under vacuum and the primary circuit is provided in the vacuum vessel 12 having excellent insulating characteristics, clearances of insulation among them can be reduced, so that the switchgear can be made more compact than conventional switchgears. Furthermore, even if arc short-circuiting occurs in the vacuum vessel 12, no gas is present in the vacuum vessel 12, so that there is no risk of explosion caused by the arc short-circuiting, thereby resulting in high safety.

### (Sixth embodiment)

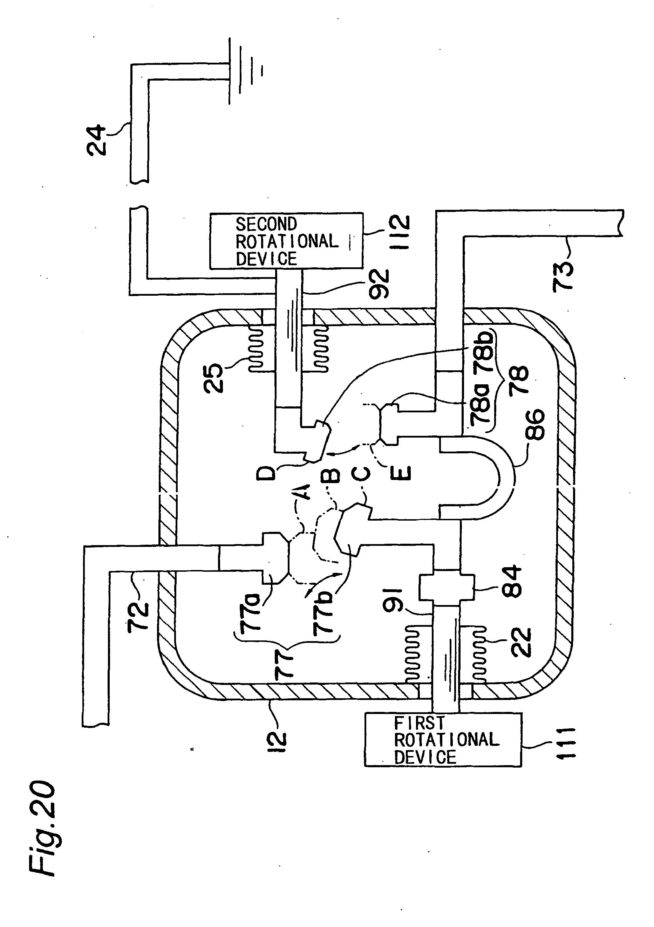

Fig. 20 is a schematic cross-sectional view showing a main portion of a switchgear according to a sixth embodiment, not part, of the present invention, in which a primary circuit switching portion 77 and a ground switching portion 78 are opened and closed by rotational operation. In Fig. 20, parts corresponding to those shown in Fig. 19 are designated by like reference numerals and their description is abbreviated for the sake of brevity.

As shown in Fig. 20, the first operating rod 91 extends in parallel with the bottom of the vacuum vessel 12 so as to be rotated by a first rotational device 111 disposed outside the vacuum vessel 12. The insulating rod 84 is provided at the distal end of the first operating rod 91 extending into the vacuum vessel 12. A first movable electrode 77b having a shape of check mark is fixed to the insulating rod 84 and a head having substantially a shape of a frustum of cone is provided at a distal end of the first movable electrode 77b so as to be directed upwardly. The first rotational device 111 rotates the first operating rod 91 forwardly and reversely so as to pivot the first movable electrode 77b among the disconnected position C, the open circuit position B and the closed circuit position A.

Meanwhile, the load terminal 73 is fixed so as to confront the first operating rod 91 of the vacuum vessel 12 and pass through the vacuum vessel 12 in parallel with the bottom of the vacuum vessel 12. The second fixed electrode 78a bent into a shape of L is coupled with a distal end of the load terminal 73 and a U-shaped flexible conductor 86 is stretched between the second fixed electrode 78a and the first movable electrode 77b.

The second operating rod 92 is provided above the load terminal 73 so as to pass through the vacuum vessel 12 in parallel with the load terminal 73 and is rotatably supported by a second rotational device 112 disposed outside the vacuum vessel 12. The second movable electrode 78b having a shape substantially similar to that of the first movable electrode 77b is attached to a distal end of the second operating rod 92 such that its head is directed downwardly. The second rotational device 112 rotates the second operating rod 92 forwardly and reversely so as to pivot the second movable electrode 78b between the open circuit position D and the closed circuit position E.

In this switchgear, since the primary circuit switching portion 77 and the ground switching portion 78 are opened and closed by rotating the first and second operating rods 91 and 92, drive mechanisms and power transmission mechanisms for the first and second operating rods 91 and 92 can be made more compact than those in the case where the first and second operating rods 91 and 92 are retractably moved.

### (Seventh embodiment)

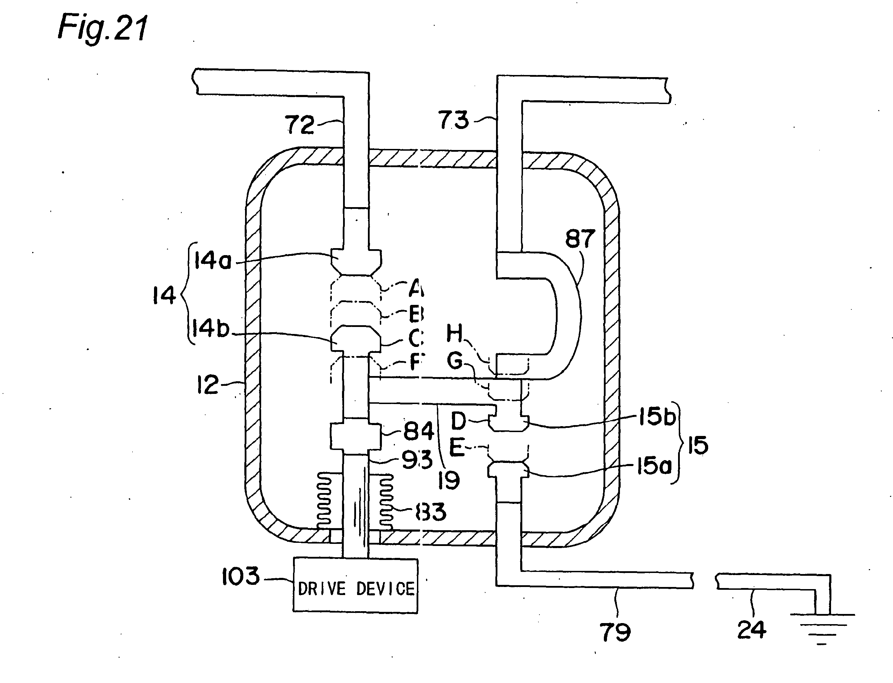

Fig. 21 is a schematic cross-sectional view showing a main portion of a switchgear according to a seventh embodiment, not part of the present invention, in which the primary circuit switching portion 14 and the ground switching portion 15 are retractably moved by a single drive device 103. Meanwhile, in Fig. 21, parts corresponding to those shown in Fig. 19 are designated by like reference numerals and their description is abbreviated for the sake of brevity.

As shown in Fig. 21, the first movable electrode 14b is disposed so as to confront the first fixed electrode 14a and the L-shaped second movable electrode 15b is provided on a periphery of the first movable electrode 14b substantially orthogonally to the first movable electrode 14b such that a head of the second movable electrode 15b is directed downwardly. The first and second movable electrodes 14b and 15b are supported by an operating rod 93 moved retractably by the drive device 103. The insulating rod 84 is provided between the operating rod 93 and the first and second movable electrodes 14b and 15b.

A grounding terminal 79 connected to the grounding conductor 24 is attached to the bottom of the vacuum vessel 12 so as to confront the second movable electrode 15b and pass through the wall of the vacuum vessel 12 vertically. The second fixed electrode 15a is provided at a distal end of the grounding terminal 79. Meanwhile, the load terminal 73 is attached to the top of the vacuum vessel 12 so as to pass through the wall of the vacuum vessel 12 vertically. A substantially U-shaped flexible conductor 87 is stretched between a lower end of the load terminal 73 and a distal end portion of the second movable electrode 15b.

By driving the operating rod 93, the drive device 103 not only advances the first movable electrode 14b from the disconnected position C through the open circuit position B to the closed circuit position A so as to close the primary circuit switching portion 14 but retracts the second movable electrode 15b from the open circuit position D of the grounding circuit through an open circuit position G of the primary circuit to a closed circuit position H of the primary circuit. At this time, the flexible circuit 87 is deflected in response to retraction of the second movable electrode 15b. Meanwhile, by driving the operating rod 93, the drive device 103 not only retracts the first movable electrode 14b from the closed circuit position A to the open circuit position B so as to open the primary circuit switching portion 14 and further retracts the first movable electrode 14b to the disconnected position C so as to disconnect the primary circuit switching portion 14 but advances the second movable electrode 15b from the closed circuit position H of the primary circuit through the open circuit position G of the primary circuit to the open circuit position D of the grounding circuit.

On the other hand, by driving the operating rod 93, the drive device 103 not only advances the second movable electrode 15b from the open circuit position D of the grounding circuit to the closed circuit position E of the grounding circuit but retracts the first movable electrode 14b from the disconnected position C to a closed circuit position F of the grounding circuit. Therefore, since the single drive device 103 retractably moves the first and second movable electrodes 14b and 15b in three stages so as to open and close the primary circuit switching portion 14 and the ground switching portion 15, the switchgear can be made compact and its production cost can be reduced.

### (Eighth embodiment)

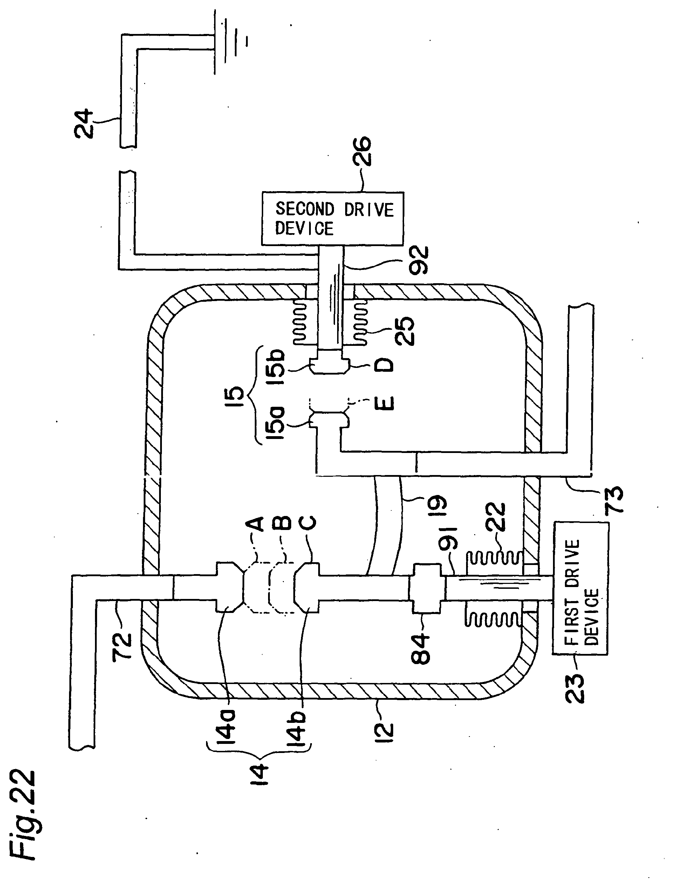

Fig. 22 is a schematic cross-sectional view showing a main portion of a switchgear according to an eighth embodiment of the present invention, in which the bus terminal, the load terminal and the grounding terminal are provided in different planes of the vacuum vessel 12, respectively. In Fig. 22, parts corresponding to those shown in Fig. 19 are designated by like reference numerals and their description is abbreviated for the sake of brevity.

As shown in Fig. 22, an upper end portion of the second fixed electrode 15a is bent substantially orthogonally in a direction away from the first movable electrode 14b and the second movable electrode15b is provided substantially in parallel with the bottom of the vacuum vessel 12 so as to confront the second fixed electrode 15a. Therefore, since the bus terminal 72, the load terminal 73 and the second operating rod 92 acting as the grounding terminal are provided in different planes of the vacuum vessel 12, respectively, it is easy to connect the bus to the bus terminal 72, connect the transmission cable to the load terminal 73 and connect the grounding conductor 24 to the second operating rod 92.

### (Ninth embodiment)

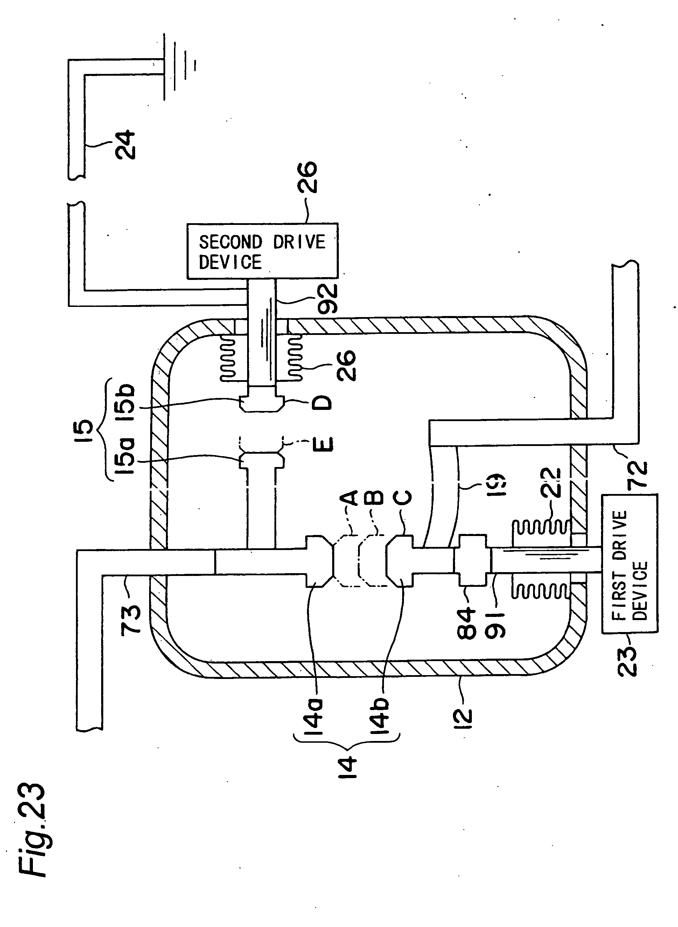

Fig. 23 is a schematic cross-sectional view showing a main portion of a switchgear according to a ninth embodiment, not part of the present invention, and illustrates another example in which the bus terminal, the load terminal and the grounding terminal are provided in different planes of the vacuum vessel 12, respectively in the same manner as the eighth embodiment. Meanwhile, in Fig. 23, parts corresponding to those shown in Fig. 22 are designated by like reference numerals and their description is abbreviated for the sake of brevity.

In this embodiment, the first fixed electrode 14a is provided at the lower end of the load terminal 73 fixed to and passing through the top of the vacuum vessel 12 and the second fixed electrode 15a is provided on a periphery of the first fixed electrode 14a so as to extend in parallel with the bottom of the vacuum vessel 12. Meanwhile, the bus terminal 72 is provided at the bottom of the vacuum vessel 12 so as to extend in parallel with the first operating rod 91. The flexible conductor 19 is stretched between a distal end portion of the bus terminal 72 and the first movable electrode 14b. Thus, in the same manner as the eighth embodiment, it is easy to connect the bus to the bus terminal 72, connect the transmission cable to the load terminal 73 and connect the grounding conductor 24 to the second operating rod 92 acting as the grounding terminal.

### (Tenth embodiment)

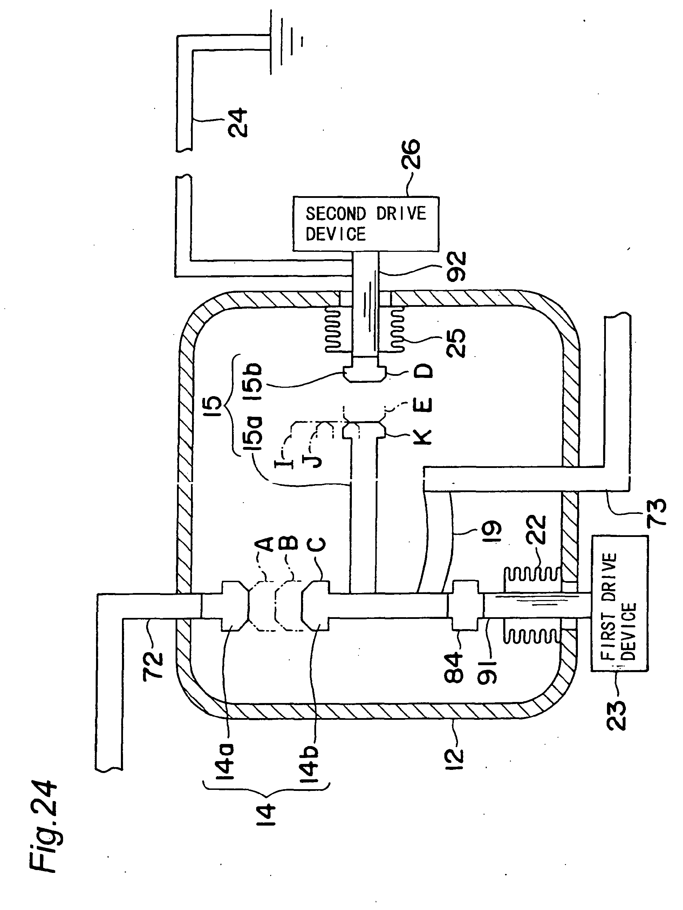

Fig. 24 is a schematic cross-sectional view showing a main portion of a switchgear according to a tenth embodiment of the present invention and illustrates still another example in which the bus terminal, the load terminal and the grounding terminal are provided in different planes of the vacuum vessel 12, respectively in the same manner as the eighth embodiment. Meanwhile, in Fig. 24, parts corresponding to those shown in Fig. 22 are designated by like reference numerals and their description is abbreviated for the sake of brevity.

In this embodiment, the second fixed electrode 15a is provided on a periphery of an upper end portion of the first movable electrode 14b so as to extend substantially in parallel with the bottom of the vacuum vessel 12 and the second movable electrode 15b is disposed so as to confront the second fixed electrode 15a. Meanwhile, the flexible conductor 19 is stretched between an upper end portion of the load terminal 73 and a periphery of a lower end portion of the first movable electrode 14b. When the first operating rod 91 is retractably moved, the first movable electrode 14b is retractably moved among the disconnected position C, the open circuit position B and the closed circuit position A, so that the second fixed electrode 15a is also retractably moved among a disconnected position K of the primary circuit, an open circuit position J of the primary circuit and a closed circuit position I of the primary circuit. When the second movable electrode 15a is disposed at the disconnected position K of the primary circuit, the second operating rod 92 is retractably moved so as to position the second movable electrode 15b at the open circuit position D or the closed circuit position E.

Thus, in the same manner as the eighth embodiment, it is easy to connect the bus to the bus terminal 72, connect the transmission cable to the load terminal 73 and connect the grounding conductor 24 to the second operating rod 92 acting as the grounding terminal.

### (Eleventh embodiment)

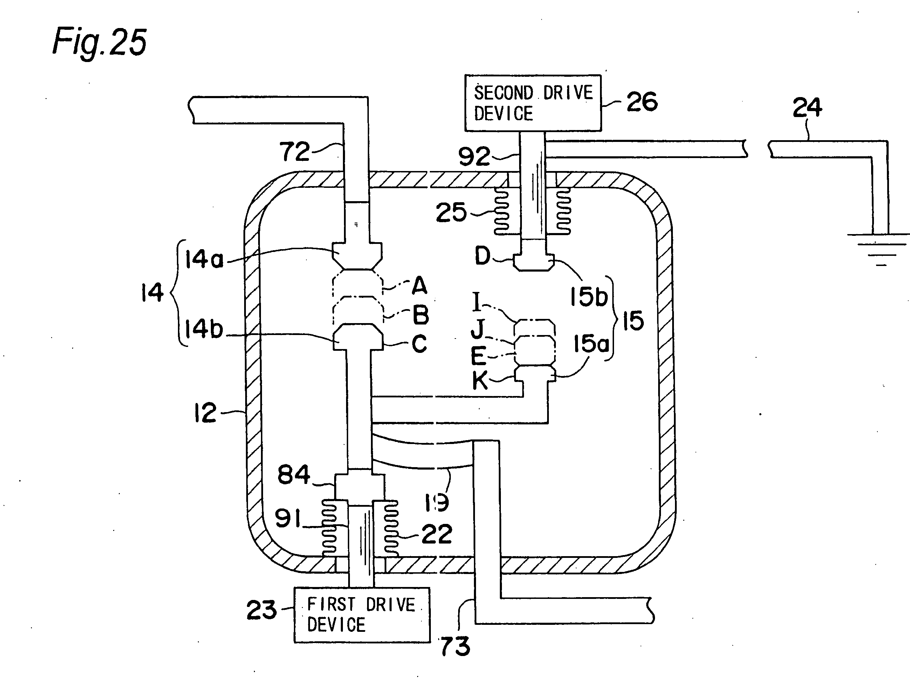

Fig. 25 is a schematic cross-sectional view showing a main portion of a switchgear according to an eleventh embodiment of the present invention, in which layout of the second fixed electrode 15a provided in the switchgear shown in Fig. 19 is changed. Meanwhile, in Fig. 25, parts corresponding to those shown in Fig. 19 are designated by like reference numerals and their description is abbreviated for the sake of brevity.

As shown in Fig. 25, the second fixed electrode 15a is coupled with a periphery of the first movable electrode 14b substantially in parallel with the bottom of the vacuum vessel 12 so as to extend from the coupling position to a location immediately below the second movable electrode 15b and is further bent upwardly so as to confront the second movable electrode 15b. The flexible conductor 19 is stretched between the upper end portion of the load terminal 73 and the first movable electrode 14b.

In this switchgear, when the first operating rod 91 is retractably moved, the first movable electrode 14b is retractably moved among the disconnected position C, the open circuit position B and the closed circuit position A, so that the second fixed electrode 15a is also retractably moved among the disconnected position K of the primary circuit, the open circuit position J of the primary circuit and the closed circuit position I of the primary circuit. When the second fixed electrode 15a is disposed at the disconnected position K of the primary circuit, the second operating rod 92 is retractably moved so as to position the second movable electrode 15b at the open circuit position D or the closed circuit position E. Accordingly, even if mounting height of the second fixed electrode 15a includes an error, the error can be eliminated by adjusting feed stroke of the second operating rod 92.

### (Twelfth embodiment)

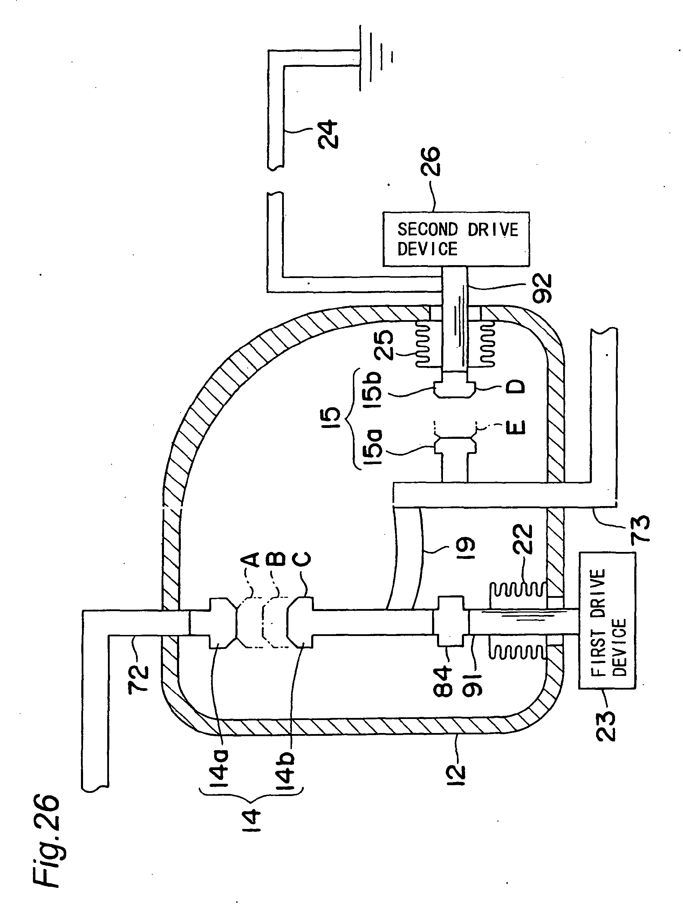

Fig. 26 is a schematic cross-sectional view showing a main portion of a switchgear according to a twelfth embodiment of the present invention, in which shape of the vacuum vessel provided in the switchgear shown in Fig. 22 is changed. Meanwhile, in Fig. 26, parts corresponding to those shown in Fig. 22 are designated by like reference numerals and their description is abbreviated for the sake of brevity.

In this embodiment, the second movable electrode 15b and the second operating rod 92 are disposed in the vicinity of the bottom of the vacuum vessel 12 and the second fixed electrode 15a is provided at a portion of the load terminal 73 confronting the second movable electrode 15b as shown in Fig. 26. The vacuum vessel 12 is molded arcuately between the bus terminal 72 and the second operating rod 92 so as to have a substantially sectorial cross-section. Thus, the switchgear can be made more compact.

### (Thirteenth embodiment)

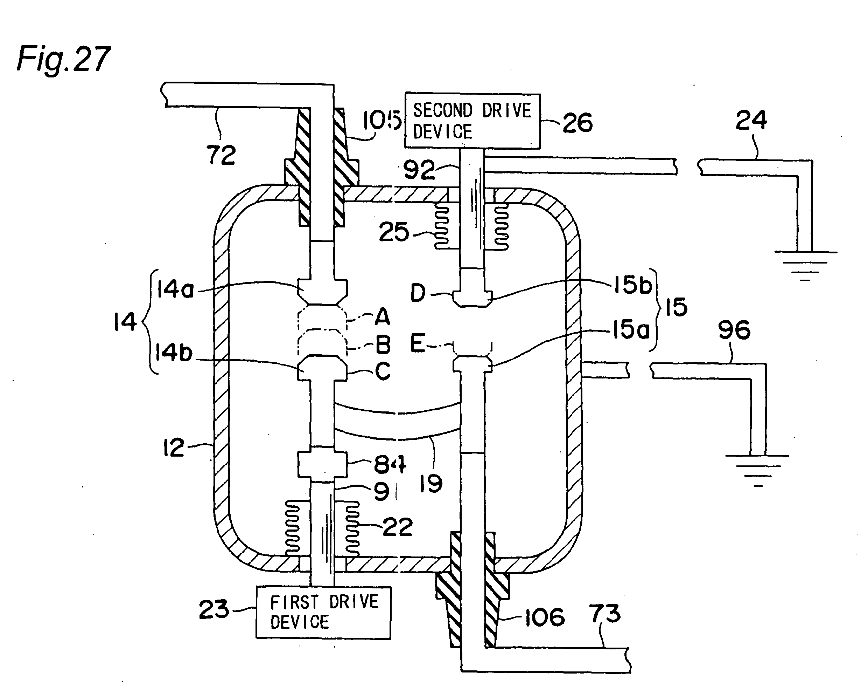

Fig. 27 is a schematic cross-sectional view showing a main portion of a switchgear according to a thirteenth embodiment of the present invention, in which the bus terminal 72 and the load terminal 73 are supported by insulating members and the vacuum vessel 12 is grounded. Meanwhile, parts corresponding to those shown in Fig. 19 are designated by like reference numerals and their description is abbreviated for the sake of brevity.

As shown in Fig. 27, the vacuum vessel 12 is formed by molding electrically conductive metal into a rectangular shell and two holes are formed on the top and the bottom of the vacuum vessel 12, respectively. First and second insulating members 105 and 106 each molded into a shape of an arrowhead having its tip removed therefrom, for example, bushings are, respectively, securely fitted into the holes so as to maintain a hermetic state such that the bus terminal 72 and the load terminal 73 pass through the first and second insulating members 105 and 106. Thus, the bus terminal 72 and the load terminal 73 are fixed to the vacuum vessel 12 so as to be insulated from the vacuum vessel 12. Meanwhile, the first and second operating rods 91 and 92 are supported, in holes formed on the vacuum vessel 12, by the first and second drive devices 23 and 26 so as to be spaced a predetermined distance from the vacuum vessel 12. Furthermore, the vacuum vessel 12 is grounded by a grounding conductor 96.

In this switchgear, since the metallic vacuum vessel 12 is employed, the vacuum vessel 12 can withstand high vacuum even if thickness of the vacuum vessel 12 is reduced, so that the vacuum vessel 12 can be made compact. Meanwhile, since the bus terminal 72 and the load terminal 73 are insulated from the vacuum vessel 12 by the first and second insulating members 105 and 106, high safety is secured. Furthermore, since the vacuum vessel 12 is grounded, safety is improved. In addition, in case a plurality of the vacuum vessels 12 are provided, clearance of insulation is not required to be provided between neighboring ones of the vacuum vessels 12, so that distance between the vacuum vessels 12 is shortened and thus, the switchgear can be made more compact.

### (Fourteenth embodiment)

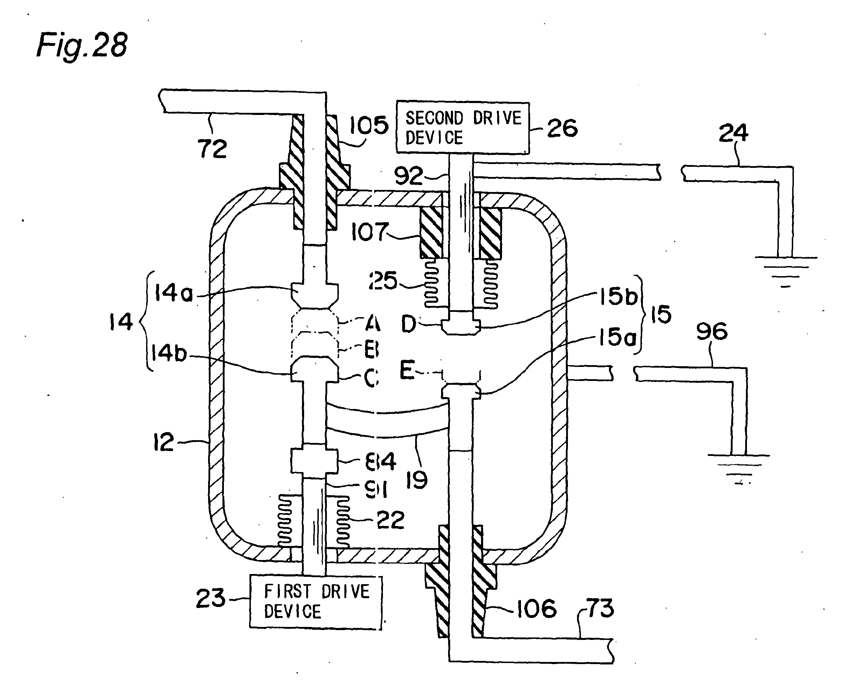

Fig. 28 is a schematic cross-sectional view showing a main portion of a switchgear according to a fourteenth embodiment of the present invention, in which the ground switching portion 15 is insulated from the vacuum vessel 12. Meanwhile, in Fig. 28, parts corresponding to those shown in Fig. 27 are designated by like reference numerals and their description is abbreviated for the sake of brevity.

As shown in Fig. 28, an annular third insulating member 107 is fitted around the second operating rod 92 in the vacuum vessel 12 and the third insulating member 107 is secured to the inner face of the vacuum vessel 12. The second bellows 25 is provided between the third insulating member 107 and the second movable electrode 15b so as to keep interior of the vacuum vessel 12 under high vacuum. Since the load terminal 73 is insulated from the vacuum vessel 12 by the second insulating member 106 fitted around the load terminal 73 and the grounding conductor 24 is insulated from the vacuum vessel 12 by the third insulating member 107 as described above, the ground switching portion 15 is insulated from the vacuum vessel 12. Since the ground switching portion 15 is insulated from the vacuum vessel 12 as described above, cable withstand voltage required of the ground switching portion 15 is raised and thus, the switchgear can be made more compact.

### (Fifteenth embodiment)

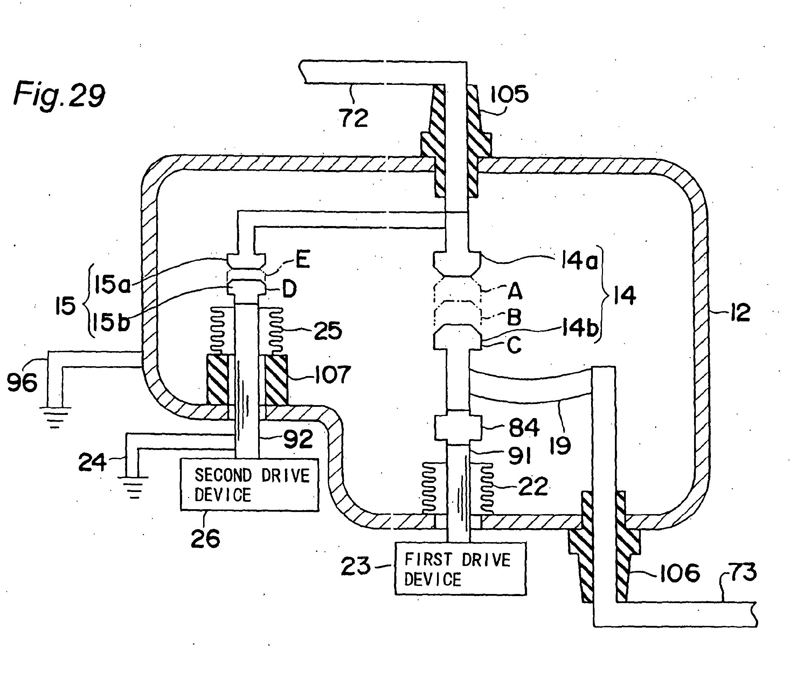

Fig. 29 is a schematic cross-sectional view showing a main portion of a switchgear according to a fifteenth embodiment of the present invention, in which layout of the second drive device 26 provided in the switchgear shown in Fig. 28 is changed. Meanwhile, in Fig. 29, parts corresponding to those shown in Fig. 28 are designated by like reference numerals and their description is abbreviated for the sake of brevity.

As shown in Fig. 29, a recess is formed on the bottom of the vacuum vessel 12 at one side of the first drive device 23 remote from the second insulating member 106 and the second drive device 26 is provided in the recess such that the first and second drive devices 23 and 26 are juxtaposed. Meanwhile, the second fixed electrode 15a is secured to the first fixed electrode 14a so as to confront the second movable electrode 15b and the flexible conductor 19 is stretched between the upper end portion of the load terminal 73 and the first movable electrode 14b.

In this embodiment, since the ground switching portion 15 is insulated from the vacuum vessel 12 in the same manner as the fourteenth embodiment, cable withstand voltage required of the ground switching portion 15 is raised and thus, the switchgear can be made more compact.

### (Sixteenth embodiment)

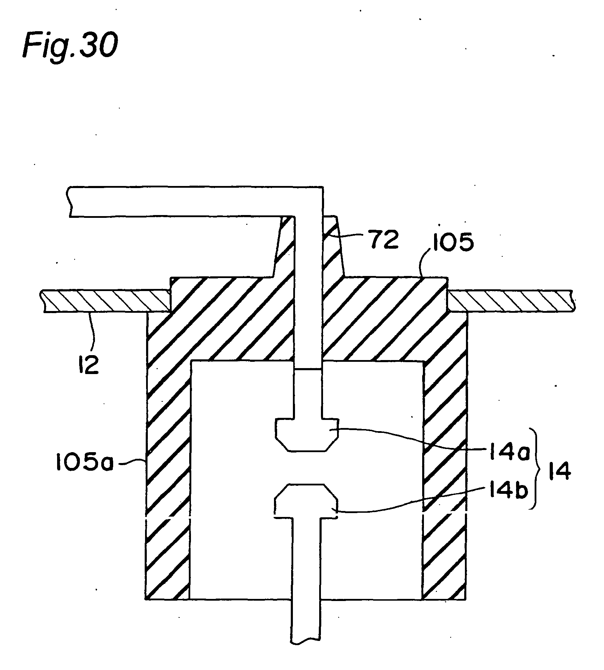

Fig. 30 is a schematic fragmentary cross-sectional view showing a main portion of a switchgear according to a sixteenth embodiment of the present invention, in which an arc shield is provided for the primary circuit switching portion 14. In Fig. 30, parts corresponding to those shown in Fig. 27 are designated by like reference numerals and their description is abbreviated for the sake of brevity.

As shown in Fig. 30, the first insulating member 105 for insulating the bus terminal 72 and the vacuum vessel 12 from each other is provided between the bus terminal 72 and the vacuum vessel 12 and a cylindrical shield portion 105a is hung from a lower edge of the first insulating member 105. This shield portion 105a is formed by integral molding. The bus terminal 72 passes through the first insulating member 105 so as to extend into the shield portion 105a and the first fixed electrode 14a is provided at the lower end of the bus terminal 72.

Meanwhile, the first movable electrode 14b is provided so as to confront the first fixed electrode 14a such that the first fixed electrode 14a and the first movable electrode 14b are surrounded by the shield portion 105a. Since the first fixed electrode 14a and the first movable electrode 14b of the primary circuit switching portion 14 are surrounded by the insulating shield portion 105a as described above, metallic vapor arc produced at the time of interception of electric current of the primary circuit switching portion 14 adheres to an inner face of the shield portion 105a and therefore, is prevented from being diffused into the vacuum vessel 12. As a result, the vacuum vessel 12 can be made more compact and performance of withstand voltage is improved.

### (Seventeenth embodiment)

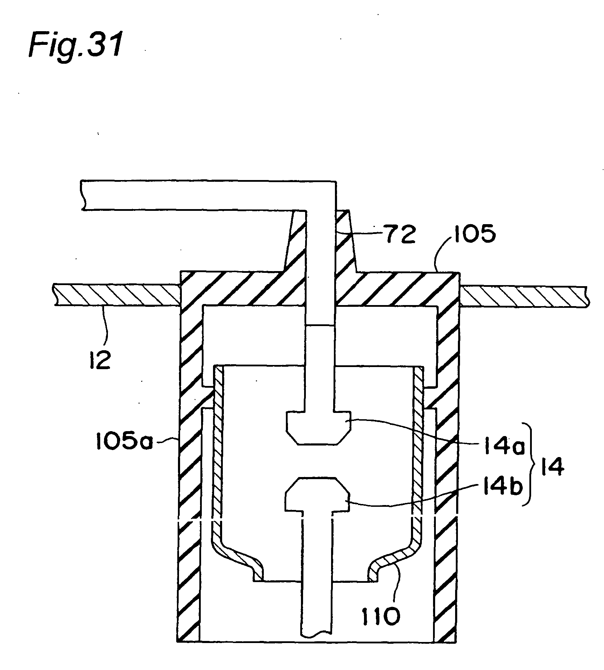

Fig. 31 is a schematic fragmentary cross-sectional view showing a main portion of a switchgear according to a seventeenth embodiment of the present invention, in which the primary circuit switching portion 14 is covered by a metallic arc shield. In Fig. 31, parts corresponding to those shown in Fig. 30 are designated by like reference numerals and their description is abbreviated tor the sake of brevity.

In this embodiment, a cylindrical metal shield 110 is disposed around the opposed first fixed and movable electrodes 14a and 14b substantially concentrically with the electrodes 14a and 14b and is fitted into the shield portion 105a of the first insulating member 105 so as to be supported by the shield portion 105a as shown in Fig. 31.

A diameter of a mouth at a lower end of the metal shield 110 is made smaller than that at an upper end of the metal shield 110 such that the arc is prevented from being diffused from the mouth at the lower end of the metal shield 110. By providing the metal shield 110 as described above, it becomes possible to further prevent diffusion of the metallic vapor into the vacuum vessel 12.

### (Eighteenth embodiment)

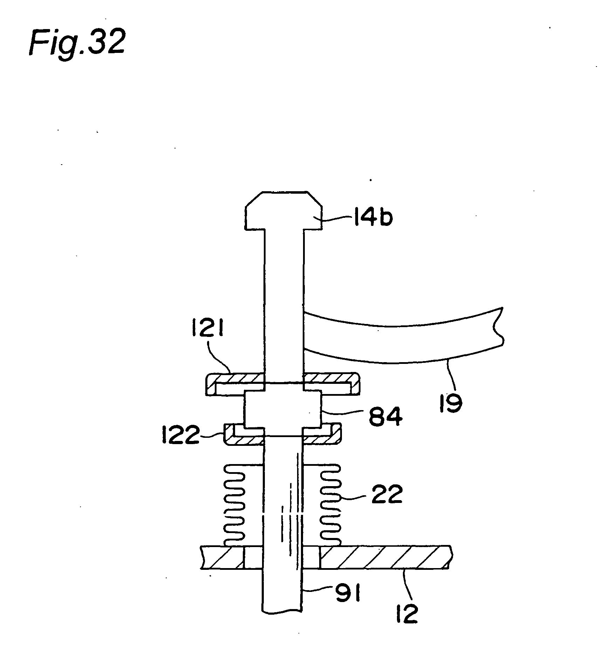

Fig. 32 is a schematic fragmentary cross-sectional view showing a main portion of a switchgear according to an eighteenth embodiment of the present invention, in which an arc shield is provided for the insulating rod 84 for supporting the first movable electrode 14b of the primary circuit switching portion 14. Meanwhile, in Fig. 32, parts corresponding to those shown in Fig. 19 are designated by like reference numerals and their description is abbreviated for the sake of brevity.

As shown in Fig. 32, first and second shield 121 and 122 each formed by molding metal into a dished shape are, respectively, fitted around a lower end portion of the first movable electrode 14b and an upper end portion of the first operating rod 91 so as to be spaced a proper distance from the insulating rod 84. The first shield 121 has a diameter larger than that of the second shield 122 and the diameter of the second shield 122 is larger than that of the insulating rod 84. Since the insulating rod 84 is surrounded by the first and second shields 121 and 122 as described above, the metallic vapor adheres to the first and second shields 121 and 122 and therefore, is prevented from being deposited on the insulating rod 84. As a result, since distance between the insulating rod 84 and the first fixed and movable electrodes 14a and 14b of the primary circuit switching portion 14 can be shortened, the switchgear can be made more compact.

When the metallic vapor has been deposited on the insulating rod 84, electric field is concentrated at the deposited portion, so that performance of withstand voltage deteriorates. However, in the present invention, since the first and second shields 121 and 122 are provided as described above, concentration of electric field at the deposited portion and deterioration of performance of withstand voltage are prevented. Meanwhile, in case the insulating rod 84 is made of ceramic material, a thin metallized layer is provided at each of a joint between the insulating rod 84 and the first movable electrode 14b and a joint between the insulating rod 84 and the first operating rod 91. By setting the first and second shields 121 and 122 at potentials identical with those of the metallized layers, it is possible to mitigate concentration of electric field at the metallized layers.

## Claims

1. A switchgear comprising:
- a bus terminal (72),
- a load terminal (73),
- a grounding terminal (92),
- a primary circuit switching portion (14) for connecting and disconnecting the bus terminal and the load terminal, which includes a pair of a first fixed electrode (14a) and a first movable electrode (14b),
- a ground switching portion (15) for connecting and disconnecting the load terminal and the grounding terminal, which includes a pair of a second fixed electrode (15a) and a second movable electrode (15b),
- a first drive device (23) for moving the first movable electrode of the primary circuit switching portion linearly towards the first fixed electrode,
- a second drive device (26) for moving the second movable electrode of the ground switching portion linearly towards the second fixed electrode, and
- a vacuum vessel (12),
wherein one end of each of the bus terminal (72), the load terminal (73) and the grounding terminal (92), the primary circuit switching portion (14) and the ground switching portion (15) are provided in the vacuum vessel (12), while the first drive device (23) and the second drive device (26) are provided outside the vacuum vessel (12),
**characterized in that**
the switchgear further comprises a flexible conductor (19) which is stretched between the load terminal (73) and the first movable electrode (14b) of the primary circuit portion (14), for connecting the first movable electrode (14b) to the load terminal (73) with relative movement.

2. A switchgear according to claim 1, further comprising a metal shield for catching metallic vapor arc produced between the first fixed electrode (14a) and the first movable electrode (14b) of the primary circuit switching portion (14), which is provided in the vacuum vessel (12).

3. A switchgear according to claim 1, further comprising an insulating rod (84) which is provided in the course of a movable member of the primary circuit switching portion (14) in a plane substantially orthogonal to a direction of movement of the movable member upon actuation of the first drive device (23).

4. A switchgear according to claim 1, wherein the second fixed electrode (15a) of the ground switching portion (15) is provided on the load terminal (73).

## Patentansprüche

1. Schalteinrichtung, mit:
- einem Bus-Anschluss (72),
- einem Lastanschluss (73),
- einem Erdungsanschluss (92),
- einem Primärschaltungsumschaltabschnitt (14) zum Verbinden und Trennen des Bus-Anschlusses und des Lastanschlusses, der ein Paar von einer ersten festen Elektrode (14a) und einer ersten bewegbaren Elektrode (14b) umfasst,
- einem Erdungsumschaltabschnitt (15) zum Verbinden und Trennen des Lastanschlusses und des Erdungsanschlusses, der ein Paar von einer zweiten festen Elektrode (15a) und einer zweiten bewegbaren Elektrode (15b) umfasst,
- einer ersten Antriebsvorrichtung (23) zum Bewegen der ersten bewegbaren Elektrode des Primärschaltungsumschaltabschnitts linear zu der ersten festen Elektrode hin,
- einer zweiten Antriebsvorrichtung (26) zum Bewegen der zweiten bewegbaren Elektrode des Erdungsumschaltabschnitts linear zu der zweiten festen Elektrode hin, und
- einem Vakuumbehälter (12),
wobei ein Ende von jedem des Bus-Anschlusses (72), des Lastanschlusses (73) und des Erdungsanschlusses (92), des Primärschaltungsumschaltabschnitts (14) und des Erdungsumschaltabschnitts (15) in dem Vakuumbehälter (12) vorgesehen sind, während die erste Antriebsvorrichtung (23) und die zweite Antriebsvorrichtung (26) außerhalb des Vakuumbehälters (12) vorgesehen sind,
**dadurch gekennzeichnet, dass**
die Schalteinrichtung ferner einen flexiblen Leiter (19) umfasst, der sich zwischen dem Lastanschluss (73) und der ersten bewegbaren Elektrode (14b) des Primärschaltungsumschaltabschnitts (14) erstreckt, zum Verbinden der ersten bewegbaren Elektrode (14b) mit dem Lastanschluss (73) mit relativer Bewegung.

2. Schalteinrichtung nach Anspruch 1, ferner mit einer Metallabschirmung zum Fangen eines Metalldampflichtbogens, der zwischen der ersten festen Elektrode (14a) und der ersten bewegbaren Elektrode (14b) des Primärschaltungsumschaltabschnitts (14) erzeugt wird, die in dem Vakuumbehälter (12) vorgesehen ist.

3. Schalteinrichtung nach Anspruch 1, ferner mit einem isolierenden Stab (84), der in dem Verlauf eines bewegbaren Elements des Primärschaltungsumschaltabschnitts (14) vorgesehen ist, in einer Ebene, die im Wesentlichen orthogonal zu einer Richtung der Bewegung des bewegbaren Elements bei Betätigung der ersten Antriebsvorrichtung (23) ist.

4. Schalteinrichtung nach Anspruch 1, bei der die zweite feste Elektrode (15a) des Erdungsumschaltabschnitts (15) an dem Lastanschluss (73) vorgesehen ist.

## Revendications

1. Appareil de commutation comprenant :
- une borne de bus (72) ;
- une borne de charge (73) ;
- une borne de mise à la terre (92),
- une partie de commutation de circuit primaire (14) destinée à connecter et à déconnecter la borne de bus et la borne de charge, qui comprend une paire d'une première électrode fixe (14a) et d'une première électrode mobile (14b) ;
- une partie de commutation de terre (15) destinée à connecter et à déconnecter la borne de charge et la borne de mise à la terre, qui comprend une paire d'une seconde électrode fixe (15a) et d'une seconde électrode mobile (15b) ;
- un premier dispositif d'entraînement (23) destiné à déplacer la première électrode mobile de la partie de commutation de circuit primaire de façon linéaire vers la première électrode fixe,
- un second dispositif d'entraînement (26) destiné à déplacer la seconde électrode mobile de la partie de commutation de terre de façon linéaire vers la seconde électrode fixe,
- un réservoir sous vide (12) ;
dans lequel une extrémité de chacune de la borne de bus (72), de la borne de charge (73) et de la borne de mise à la terre (92), de la partie de commutation de circuit primaire (14) et de la partie de commutation de terre (15) est prévue dans le réservoir sous vide (12), tandis que le premier dispositif d'entraînement (23) et le second dispositif d'entraînement (26) sont prévus à l'extérieur du réservoir sous vide (12),
**caractérisé en ce que**
l'appareil de commutation comprend en outre un conducteur flexible (19) qui est étiré entre la borne de charge (73) et la première électrode mobile (14b) de la partie de commutation de circuit primaire (14), pour connecter la première électrode mobile (14b) à la borne de charge (73) avec un mouvement relatif.

2. Appareil de commutation selon la revendication 1, comprenant en outre un écran métallique destiné à attraper l'arc de vapeur métallique produit entre la première électrode fixe (14a) et la première électrode mobile (14b) de la partie de commutation de circuit primaire (14), qui est prévu dans le réservoir sous vide (12).

3. Appareil de commutation selon la revendication 1, comprenant en outre une tige d'isolation (84) qui est prévue sur le trajet d'un élément mobile de la partie de commutation de circuit primaire (14) dans un plan sensiblement orthogonal par rapport à une direction de mouvement de l'élément mobile lors de l'actionnement du premier dispositif d'entraînement (23).

4. Appareil de commutation selon la revendication 1, dans lequel la seconde électrode fixe (15a) de la partie de commutation de terre (15) est prévue sur la borne de charge (73).
